# EUROPEAN PATENT SPECIFICATION

(11) **EP 3 724 464 B1**
(45) Date of publication and mention of the grant of the patent: **19.07.2023**
(21) Application number: 18887578.5
(22) Date of filing: 13.12.2018
(51) Int. Cl.: F01M 1/08, F01M 1/16, F16N 7/34, F16N 7/38, F16N 13/16

(54) **A LARGE SLOW-RUNNING TWO-STROKE ENGINE, A METHOD OF LUBRICATING IT, AND AN INJECTOR WITH A STEP-WISE HYDRAULIC PUMPING SYSTEM FOR SUCH ENGINE AND METHOD**
GROSSER LANGSAM LAUFENDER ZWEITAKTMOTOR UND VERFAHREN ZU SEINER SCHMIERUNG SOWIE INJEKTOR MIT SCHRITTWEISEM HYDRAULISCHEM PUMPSYSTEM FÜR EINEN SOLCHEN MOTOR UND VERFAHREN
GROS MOTEUR À DEUX TEMPS LENT, PROCÉDÉ DE LUBRIFICATION DE CELUI-CI, ET INJECTEUR DOTÉ D'UN SYSTÈME DE POMPAGE HYDRAULIQUE PAS À PAS POUR UN TEL MOTEUR ET PROCÉDÉ

(30) Priority: 13.12.2017 DK PA201770939
(43) Date of publication of application: 21.10.2020
(73) Proprietor: Hans Jensen Lubricators A/S, 9560 Hadsund (DK)
(72) Inventor: BAK, Peer, 9300 Sæby (DK)
(74) Representative: Patrade A/S
(86) International application number: PCT/DK2018/050356
(87) International publication number: WO 2019/114906

(56) References cited:
- EP-A1- 2 177 720
- EP-A1- 3 175 094
- WO-A1-02/35068
- WO-A1-2010/149162
- WO-A1-2014/048438
- WO-A1-2016/015732
- WO-A1-2016/173601
- DE-A1-102013 104 822
- DE-A1-102013 104 822
- DK-A1- 201 670 630
- DK-B1- 177 574

## Description

### FIELD OF THE INVENTION

The present invention relates to a large slow-running two-stroke engine and a method of lubricating it as well as an injector with a step-wise hydraulic pumping system.

### BACKGROUND OF THE INVENTION

Due to the focus of on environmental protection, efforts are on-going with respect reduction of emissions from marine engines. This also involves the steady optimization of lubrication systems for such engines, especially due to increased competition. One of the economic aspects with increased attention is a reduction of oil consumption, not only because of environmental protection but also because this is a significant part of the operational costs of ships. A further concern is proper lubrication despite reduced lubricant volume because the longevity of diesel engines should not be compromised by the reduction of oil consumption. Thus, there is a need for steady improvements with respect to lubrication.

For lubricating of large slow-running two-stroke marine diesel engines, several different systems exist, including injection of lubrication oil directly onto the cylinder liner or injection of oil quills to the piston rings. Lubricating systems and components therefore are disclosed in WO2008/141650A1, WO2016/015732A1, WO2010/136525A2, WO2009/015666A1, WO2006/089558A1.

An example of a lubricant injector for a marine engine is disclosed in EP1767751, in which a non-return valve is used to provide the lubricant access to the nozzle passage inside the cylinder liner. The non-return valve comprises a reciprocating spring-pressed ball in a valve seat just upstream of the nozzle passage, where the ball is displaced by pressurised lubricant. The ball valve is a traditional technical solution, based on a principle dating back to the start of the previous century, for example as disclosed in GB214922 from 1923.

An alternative and relatively new lubrication method, compared to traditional lubrication, is commercially called Swirl Injection Principle (SIP). It is based on injection of a spray of atomized droplets of lubricant into the scavenging air swirl inside the cylinder. The helically upwards directed swirl results in the lubricant being pulled towards the Top Dead Centre (TDC) of the cylinder and pressed outwards against the cylinder wall as a thin and even layer. This is explained in detail in international patent applications WO2010/149162 and WO2016/173601. The injectors comprise an injector housing inside which a reciprocating valve member is provided, typically a valve needle. The valve member, for example with a needle tip, closes and opens the lubricant's access to a nozzle aperture according to a precise timing. In current SIP systems, a spray with atomized droplets is achieved at a pressure of, typically, 35-40 bars, which is substantially higher than the oil pressure of less than 10 bars that are used for systems working with compact oil jets that are introduced into the cylinder. In some types of SIP valves, the high pressure of the lubricant is also used to move a spring-loaded valve member against the spring force away from the nozzle aperture such that the highly pressurised oil is released therefrom as atomized droplets. The ejection of oil leads to a lowering of the pressure of the oil on the valve member, resulting in the valve member returning to its origin and remaining there until the next lubricant cycle where highly pressurized lubricant is supplied to the lubricant injector again.

In such large marine engines, a number of injectors are arranged in a circle around the cylinder, and each injector comprises one or more nozzle apertures at the tip for delivering lubricant jets or sprays into the cylinder from each injector. Examples of SIP lubricant injector systems in marine engines are disclosed in international patent applications WO2002/35068, WO2004/038189, WO2005/124112, WO2010/149162, WO2012/126480, WO2012/126473, WO2014/048438, and WO2016/173601.

For SIP injection, a precisely controlled timing is essential in addition to the objective of minimizing oil consumption. For this reason, SIP systems are specially designed for quick reactive response during injection-cycles.

International patent application WO2011/110181 discusses the importance of precise lubricant dosing in a lubrication systems of marine engines. For the precise timing of the dosing, a double valve system is disclosed for separate control of opening and closing time of the lubricant injector, allowing the system to be adjusted to a short dosing period. However, precise adjustment of the dosing period is not sufficient for a precise dosing volume, as the dispensed volume is not only defined by the length of the time of dispensing but also depends on the pressure of the lubricant as well as on the viscosity, which, in turn, depends on the temperature.

In order to provide precisely controlled amounts of lubricant, systems have been proposed where the injection amount is fixed in volume by hardware instead of being dependent on the time length for injection. In some prior art examples, the lubricant amount for injection can be selected among various discrete options. An example is disclosed in WO2008/141650, in which a central pumping unit, which pumps lubricant to a group of injectors, comprises a double-piston system where activation of either one or the other or both pistons can be selected for thereby providing one of three different selectable portions of injection. After each one of such injections, the central plunger system is retracted.

A different type of central pumping unit acting on a group of injectors is disclosed in Danish patent DK177845, largely equivalent with German patent application DE102013104822. However, despite precision advantages, these central pumping systems lack flexibility with respect to individual adjustment of the injectors and with respect to freely subgrouping injectors in the engine.

Thus, despite these attempts for advantages of lubrication systems and advanced dosing systems for injectors in general, a steady motivation for improvements exists.

### DESCRIPTION / SUMMARY OF THE INVENTION

It is therefore the objective of the invention to provide an improvement in the art. A particular objective is to provide a better volume control of lubricant ejection by the injector. Especially, it is the objective to improve lubrication with SIP valves in a large slow-running two-stroke engine. These objectives are achieved by a system in a large slow-running two-stroke engine and method as described in the following, as well as by an injector for the engine and method.

The large slow-running two-stroke engine comprises a cylinder with a reciprocal piston inside and with a plurality of injectors distributed along a perimeter of the cylinder for injection of lubricant into the cylinder at various positions on the perimeter during injection phases. For example, the large slow-running two-stroke engine is a marine engine or a large engine in power plants. Typically, the engine is burning diesel or gas fuel.

The engine further comprises a controller. The controller is configured for controlling the amount and timing of the lubricant injection by the injectors during an injection phase. Optionally, also the injection frequency is controlled by the controller. For precise injection, it is an advantage if the controller is electronically connected to a computer or comprises a computer, where the computer is monitoring parameters for the actual state and motion of the engine. Such parameters are useful for the control of optimized injection. Optionally, the controller is provided as an add-on system for upgrade of already existing engines. A further advantageous option is a connection of the controller to a Human Machine Interface (HMI) which comprises a display for surveillance and input panel for adjustment and/or programming of parameters for injection profiles and optionally the state of the engine. Electronic connections are optionally wired or wireless or a combination thereof.

The term "injector" is used for an injection valve system comprising a housing with a lubricant inlet and one single injection nozzle with a nozzle aperture as a lubricant outlet and with a movable member inside the housing, which opens and closes access for the lubricant to the nozzle aperture. Although, the injector has a single nozzle that extends into the cylinder through the cylinder wall, when the injector is properly mounted, the nozzle itself, optionally, has more than a single aperture. For example, nozzles with multiple apertures are disclosed in WO2012/126480.

The term "injection phase" is used for the time during which lubricant is injected into the cylinder by an injector. The term "idle phase" is used for the time between injection phases. The term "injection-cycle" is used for the time it takes to start an injection sequence and until the next injection sequence starts. For example, the injection sequence comprises a single injection, in which case the injection-cycle is measured from the start of the injection phase to the start of the next injection phase. The term "timing" of the injection is used for the adjustment of the start of the injection phase by the injector relatively to a specific position of the piston inside the cylinder. The term "frequency" of the injection is used for the number of repeated injections by an injector per revolution of the engine. If the frequency is unity, there is one injection per revolution. If the frequency is 1/2, there is one injection per every two revolutions. This terminology is in line with the above mentioned prior art.

In a practical embodiment, the housing of the injector comprises a base with a lubricant inlet port for receiving lubricant and comprises a flow chamber, typically a rigid cylindrical flow chamber, which rigidly connects the base with the nozzle. The flow chamber is hollow and, thus, allows lubricant to flow inside the flow chamber from the base to the nozzle. When the injector is mounted, the flow chamber extends through the cylinder wall of the engine so that the nozzle is held rigidly inside the cylinder by the flow chamber. Due to the base being provided at the opposite end of the flow chamber, it is typically located on or at the outer side of the cylinder wall. For example, the injector comprises a flange at the base for mounting onto the outer cylinder wall.

In order to fully understand the invention, it is pointed out that it has been discovered that lubricant conduits of a substantial length from a pumping system to the cylinder with the plurality of injectors introduce imprecision of the system. Long conduits tend to expand and retract slightly when being exposed to highly pressurised lubricant, which leads to slight uncertainties in timing and volume of injected lubricant. Furthermore, the lubricant is subject to minute compression and expansion during an injection cycle, which adds to the effect. Although, this effect is small, it introduces errors in the range of milliseconds for the injection, which is substantial in comparison to the short SIP injection time, which can be as little as 10 milliseconds or even below 1 millisecond. Such effect of imprecise timing has substantial influence on SIP lubrication systems due to the high lubricant pressure and the short injection periods. Also, it is noticed that the injection amount is typically regulated by the time length in which pressurised oil is supplied to the nozzle in an injection cycle, in which case, uncertainty factors that affect a precise timing should be minimised, if not eliminated. Improvement with respect to the injection is achieved with a system and method as described in the following with various embodiments and details.

In contrast to the above-mentioned WO2008/141650 and DE102013104822, disclosing dosing remotely from the injectors, which leads to such imprecisions, the invention uses a different approach, where each injector is provided a hydraulic-driven multi-step piston-based pumping-system. By providing each of the injectors with such a pumping-system, the volume that is injected into the cylinder is precisely determined by the predetermined volumes inside the injector. Imprecisions in the injected volume due to expansion and contraction of long pipes outside the injector are avoided. In particular, the injectors comprise a pumping-system with a hydraulically driven plunger-member which during motion by well-defined predetermined stroke-length pressurises the lubricant inside the injectors up to a pressure necessary for ejection through the nozzle aperture.

The pumping-system is activated such that the plunger-member is moved in consecutive sequential steps, whereby a first portion with a first precisely predetermined volume and a subsequent second portion with a second precisely predetermined volume are ejected one after the other before retraction of the plunger-member between injection phases. The volumes are precisely predetermined due to the plunger-member's well-defined range of motion inside the injector.

In some embodiments, the pumping system comprises multiple plunger elements, including the plunger-member, which are activated sequentially.

Each of the injectors comprises an outlet-valve system at the nozzle configured for opening for flow of lubricant to the nozzle aperture during an injection phase upon pressure rise above a predetermined limit at the outlet-valve system and for closing the outlet-valve system after the injection phase. The outlet-valve system closes off for back-pressure from the cylinder and also prevents lubricant to enter the cylinder unless the outlet-valve is open. In addition, the outlet-valve system assists in a short closing time after injection, adding to precision in timing and volume of injected lubricant.

For example, the outlet-valve system comprises an outlet non-return valve. In the outlet non-return valve, the outlet-valve member, for example a ball, ellipsoid, plate, or cylinder, is pre-stressed against an outlet-valve seat by an outlet-valve spring. Upon provision of pressurised lubricant in a flow chamber upstream of the outlet-valve system, the pre-stressed force of the spring is counteracted by the lubricant pressure, and if the pressure is higher than the spring force, the outlet-valve member is displaced from its outlet-valve seat, and the outlet non-return valve opens for injection of lubricant through the nozzle aperture into the cylinder. For example, the outlet-valve spring acts on the valve member in a direction away from the nozzle aperture, although, an opposite movement is also possible.

A front chamber is provided in the injector for containing lubricant and communicating with the outlet-valve system. It is configured for ejection of at least a portion of the lubricant from the front chamber through the outlet-valve system upon pressurization of the front chamber in the injection phase.

As mentioned, the pumping-system is configured for driving the plunger-member in multiple consecutive steps before retraction of the plunger-member. In each of the consecutive steps the lubricant inside the front-chamber is pressurized to above the predetermined limit for consecutive injection of multiple predetermined portions of lubricant from the front chamber through the outlet-valve system and the nozzle aperture into the cylinder before retraction of the plunger-member and refilling of lubricant into the front chamber.

In practical embodiments, the method comprises
- in the first injection step, driving the plunger-member by a predetermined stroke-length and causing pressure rise in the front chamber above the predetermined pressure level and pumping a first predetermined lubricant volume, defined by the stroke-length, through the non-return outlet-valve and the nozzle aperture into the cylinder;
- in the second injection step, further driving the plunger-member a predetermined distance of motion towards the nozzle aperture and pumping a second predetermined lubricant volume, defined by the distance of motion, through the non-return outlet-valve and the nozzle aperture into the cylinder;
- only after completion of both the first and second injection step, retracting the plunger-member and re-filling the front chamber with the lubricant for a subsequent injection.

For example, for providing the plunger-member's well-defined range of motion inside the injector, the pumping-system comprises a hardware end-stop for delimiting a range of motion of the plunger-member in each of the multiple steps. Advantageously, multiple end-stops are provided. Such end-stops are provided as physical obstacles, hindering the further driving, for example driving in forward motion towards the nozzle, of the plunger-member. For example, the stroke-length is delimited by a first hardware end-stop, and the distance of motion is delimited by a second hardware end-stop.

Practical examples of pumping systems are described in more detail in the following.

For example, the controller is connected by a feed conduit and by an actuator conduit to at least one of the injectors for supplying a first portion of pressure liquid from the actuator conduit and a second portion of pressure liquid from the feed conduit to the injector, one portion after the other. This is used for driving the plunger-member in consecutive steps.

In some embodiments, the pressure liquid in the actuator conduit is used for driving an actuator-member in a hydraulic pumping system inside the injector housing in a first hydraulic injection step by which the lubricant is pressurized in the injector and a first portion of the pressurized lubricant is ejected therefrom into the cylinder of the engine. As also will become more apparent from the following, a second hydraulic injection step is used for injecting a second portion of the pressurized lubricant by the pumping system into the cylinder of the engine. The pumping system inside the injector housing also comprises the plunger-member. The pressure liquid for this second hydraulic injection step is provided from the feed conduit and is acting on the plunger-member inside the housing.

The injector comprises an actuator port for flow-connection to the actuator conduit from the controller and a pressure chamber in communication with the actuator port for receiving the first portion of pressure liquid from the actuator conduit through the actuator port in the injection phase, the first portion of pressure liquid having a pressure above the predetermined pressure level. The pressure-liquid drives a hydraulic pumping system in the injector. The hydraulic pumping system comprises a reciprocal hydraulic-driven actuator-member in contact with the pressure chamber and configured for being driven a predetermined stroke-length in a direction towards the nozzle aperture by the first portion of the pressure-liquid in the pressure chamber in the injection phase. The pumping system also comprises a reciprocal plunger-member in contact with the front chamber, which, in the injection phase, is driven by the actuator-member the stroke-length towards the nozzle aperture, which is causing pressure rise in the front chamber and causes pumping a first predetermined lubricant volume, defined by the stroke-length, from the front chamber through the non-return valve and the nozzle aperture into the cylinder as a first injection step.

An inlet port is provided in the injector for flow-connection to the feed conduit from the controller. The injector further comprises an intermediate chamber in communication with the inlet port for receiving a second portion of pressure-liquid from the feed conduit through the inlet port in the injection phase, the second portion of pressure liquid having a pressure above the predetermined pressure level. The reciprocal plunger-member is in contact with the intermediate chamber and configured for being hydraulically driven a predetermined distance of motion by the second portion of pressure liquid, for pumping a second predetermined lubricant volume, defined by the predetermined distance of motion, from the front chamber through the non-return outlet-valve and the nozzle aperture into the cylinder as a second injection step. For the total movement of the plunger-member, the distance of motion of the plunger-member in the second step is added to the stroke-length of the actuator of the first step.

During operation, in the first injection step, pressure-liquid is provided at the actuator port and a first portion of pressure liquid is inserted into the pressure chamber and force exerted on the actuator-member by the first portion of pressure liquid. This force drives the actuator-member a stroke-length towards the nozzle aperture. The actuator-member, in turn, drives the plunger-member by the same stroke-length and causes first pressure rise in the font chamber to above the predetermined pressure level and then causes pumping a first predetermined lubricant volume through the non-return outlet-valve and the nozzle aperture into the cylinder. In the second injection step, pressure-liquid is provided at the inlet port and a second portion of pressure liquid is inserted into the intermediate chamber, exerting force on the plunger-member so that it is driven by the second portion of pressure liquid the distance of motion towards the nozzle aperture. This, in turn, leads to pumping a second predetermined lubricant volume through the non-return outlet-valve and the nozzle aperture into the cylinder.

After the two subsequent injection phases, the actuator-member and the plunger-member are retracted and the front chamber is re-filled with lubricant for a subsequent injection phase. For such refilling, a chamber-valve system is provided, which opens for lubricant flow into the front chamber during retraction.

In some embodiments, it is possible to not only inject a first portion and a subsequent second portion prior to retraction but it is also selectively possible to use the pumping-system in a different way, where only the first portion is injected and the actuator-member and plunger-member then retracted. Thus, there are two modes of functioning.

Optionally, the time lag between the first and the second portion can be arbitrarily chosen and can approach zero in case that the first and the second portion should be injected together.

In practical embodiments, the engine is configured for providing pressure liquid in the feed conduit with alternating pressure between a high pressure above the predetermined pressure level and a low pressure below the predetermined pressure level. The high pressure phase in the feed conduit is then used for pushing the plunger-member, for example towards the nozzle aperture, for injection, and the low pressure phase is used for retraction of the plunger-member between injection phases. For example, the plunger is spring-loaded for causing the retraction of the plunger-member when the intermediate chamber is not pressurised to above the predetermined pressure level.

For example, the pressure liquid in the feed conduit is lubricant, and lubricant in the front chamber for injection in the injection phase is received through the inlet port from the feed conduit, when the pressure in the feed conduit is low between the injection phases. For example, the retraction of the plunger-member creates a suction force in the front chamber which causes re-filling thereof with lubricant. In this embodiment, the feed conduit has a double function, namely refilling the front chamber with lubricant between injection phases and driving the plunger by pressurised lubricant in the injection phase.

In some embodiments, the engine comprises a supply conduit for supplying pressurised lubricant to the controller at a pressure above the predetermined pressure level; and the engine comprises a return conduit for draining the lubricant from the controller at a pressure below the predetermined pressure level.

For example, the pressure liquid in the feed conduit is lubricant received from the return conduit, which is used for refilling the front chamber between injection phases in the third state.

Advantageously, the controller comprises a controller valve system configured for shifting between states of the pumping system in the controller. For example, in a first state, the controller valve system connects the supply conduit to the actuator conduit and not to the feed conduit for the first injection step, and in a second state, the controller valve system connects the supply conduit to the actuator conduit and to the feed conduit for the second injection step. For example, in a third step, the controller valve system disconnects the supply conduit from the actuator conduit and from the feed conduit, and connects the return conduit to the actuator conduit and to the feed conduit for retraction of the actuator-member and the plunger-member, having in mind that the pressure in the return conduit is lower. The operation comprise cyclically shifting from the first state for the first injection step, to the second state in the second injection step, and then to the third state for retraction.

In some practical embodiment for the chamber-valve system, the injector comprises a bushing in which the plunger-member is slidingly arranged. The plunger-member comprises a flow aperture configured for reciprocal sliding in and out of the bushing and thereby being alternatingly closed and opened. Alternatively, the bushing comprises a flow aperture configured for being alternatingly closed and opened by the reciprocal movement of the plunger-member in the bushing. Leakage between the flow aperture and the inner side of the bushing is prevented by the plunger-member tightly abutting the bushing.

In practice, the plunger-member is retracted and the flow aperture opened and the front chamber connected with the inlet port for supply of lubricant from the feed conduit through the inlet port and the flow aperture and into the front chamber, which causes refilling the front chamber between injection phases.

For example, the front chamber is connected with the intermediate chamber by opening the flow aperture and flow of lubricant is caused through the flow aperture from the intermediate chamber to the front chamber. Subsequently the front chamber is disconnected from the intermediate chamber by closing the flow aperture, which prevents back-flow of lubricant from the front chamber to the intermediate chamber when lubricant is expelled from the front chamber through the nozzle aperture by the forward movement of the plunger-member in the injection phase.

As an alternative, the chamber-valve system between the intermediate chamber and the front chamber comprises a suction valve, which closes during the plunger-member's pressurising of the lubricant on the front chamber and opens during retraction of the plunger-member. The suction valve is optionally implemented in the plunger-member.

In case that the outlet-valve system comprises a non-return valve in the nozzle, and the non-return valve comprises a valve member, for example ball, which is spring pressed against a valve seat, a high degree of robustness against failure has been observed. These systems are simple, and the risk for clogging is minimal. Also, the valve seats tend to be self-cleaning and subject to little uneven wear, especially for valve members being balls, why a high and long-term reliability is provided. Accordingly, the injector is simple and reliable, quick and precise, and easy to construct from standard components with low production costs.

The invention also has distinct advantages over systems in which a valve system for high-pressure feeding the injector is provided remote from the injector, for example as disclosed in the above-mentioned EP1767751. As the injector, as described above, compresses the lubricant inside the injector just upstream of the nozzle implies a short and rigid flow chamber for the compressed lubricant. Thereby, uncertainties and imprecisions of the injection amount and the timing are minimized in that minute compression and expansion of the oil in relatively long prior art conduits are avoided as well as expansion of the conduits themselves.

For example, the injectors comprise a nozzle with a nozzle aperture of between 0.1 and 1 mm, for example between 0.2 and 0.5mm, and are configured for ejecting a spray of atomized droplets, which is also called a mist of oil.

A spray of atomized droplets is important in SIP lubrication, where the sprays of lubricant are repeatedly injected by the injectors into the scavenging air inside the cylinder prior to the piston passing the injectors in its movement towards the TDC. In the scavenging air, the atomized droplets are diffused and distributed onto the cylinder wall, as they are transported in a direction towards the TDC due to a swirling motion of the scavenging air towards the TDC. The atomization of the spray is due to highly pressurized lubricant in the lubricant injector at the nozzle. The pressure is higher than 10 bars, typically between 25 bar and 100 bar for this high pressure injection. An example is an interval of between 30 and 80 bars, optionally between 35 and 60 bars. The injection time is short, typically in the order of 5-30 milliseconds (msec). However, the injection time can be adjusted to 1 msec or even less than 1 msec, for example down to 0.1 msec. Therefore imprecisions of only a few msec may alter the injection profile detrimentally, why high precision is required, as already mentioned above, for example a precision of 0.1 msec.

Also, the viscosity influences the atomization. Lubricants used in marine engines, typically, have a typical kinematic viscosity of about 220 cSt at 40°C and 20 cSt at 100°C, which translates into a dynamic viscosity of between 202 and 37 mPa·s. An example of a useful lubricant is the high performance, marine diesel engine cylinder oil ExxonMobil^{®} Mobilgard^{™} 560VS. Other lubricants useful for marine engines are other Mobilgard^{™} oils as well as Castrol^{®} Cyltech oils. Commonly used lubricants for marine engines have largely identical viscosity profiles in the range of 40-100°C and are all useful for atomization, for example when having a nozzle aperture diameter of 0.1-0.8 mm, and the lubricant has a pressure of 30-80 bars at the aperture and a temperature in the region of 30-100°C or 40-100°C. See also, the published article on this subject by Rathesan Ravendran, Peter Jensen, Jesper de Claville Christiansen, Benny Endelt, Erik Appel Jensen, (2017) "Rheological behaviour of lubrication oils used in two-stroke marine engines", Industrial Lubrication and Tribology, Vol. 69 Issue: 5, pp.750-753, https://doi.org/10.1108/ILT-03-2016-0075.

### SHORT DESCRIPTION OF THE DRAWINGS

The invention will be explained in more detail with reference to the drawing, where
- FIG. 1: is a sketch of part of a cylinder in an engine;
- FIG. 2: is a drawing of an embodiment of the injector, where a) is an overview image, b) illustrates a first injection step, and c) illustrates a second injection step;
- FIG. 3: is illustrating a) a nozzle with a ball valve as non-return valve, b) a nozzle with an alternative non-return valve, c) a suction valve in the plunger-member;
- FIG. 4: is illustrating an embodiment of the controller in cooperation with the injector
- FIG. 5: is a principle sketch for an injector with three ports for multi-step injection, illustrating a) an idle state, b) a first injection state, c) a second injection state, and d) a third injection state.

### DETAILED DESCRIPTION / PREFERRED EMBODIMENT

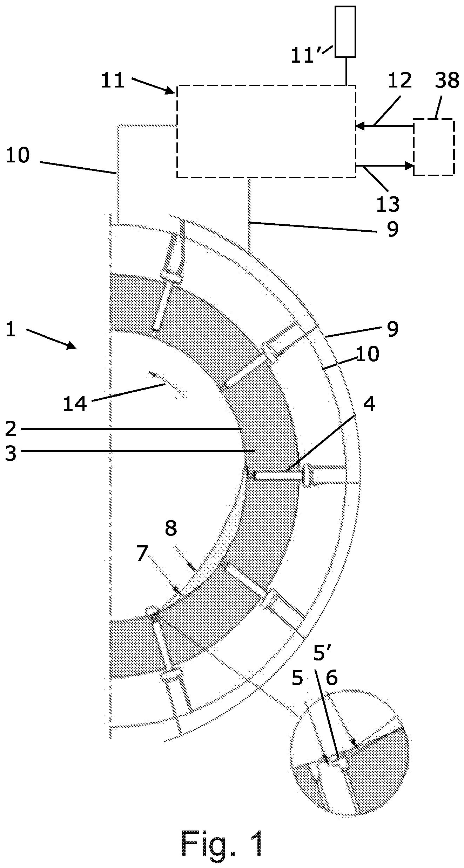

FIG. 1 illustrates one half of a cylinder 1 of a large slow-running two-stroke engine, for example marine diesel engine. The cylinder 1 comprises a cylinder liner 2 on the inner side of the cylinder wall 3. Inside the cylinder wall 3, there are provided a plurality of injectors 4 for injection of lubricant into the cylinder 1. As illustrated, the injectors 4 are distributed along a circle with the same angular distance between adjacent injectors 4, although this is not strictly necessary. Also, the arrangement along a circle is not necessary, seeing that an arrangement with axially shifted injectors is also possible, for example every second injector shifted relatively to a neighbouring injector.

Each of the injectors 4 has a nozzle 5 with a nozzle aperture 5' from which a fine atomized spray 8 with miniature droplets 7 is ejected under high pressure into the cylinder 1.

For example, the nozzle aperture 5' has a diameter of between 0.1 and 0.8 mm, such as between 0.2 and 0.5 mm, which at a pressure of 10-100 bars, for example 25 to 100 bars, optionally 30 to 80 bars or even 50 to 80 bars, atomizes the lubricant into a fine spray 8, which is in contrast to a compact jet of lubricant. The swirl 14 of the scavenging air in the cylinder 1 transports and presses the spray 8 against the cylinder liner 2 such that an even distribution of lubrication oil on the cylinder liner 2 is achieved. This lubrication system is known in the field as Swirl Injection Principle, SIP.

However, also other principles are envisaged in connection with the improved lubrication system, for example injectors that have jets directed towards the cylinder liner.

Optionally, the cylinder liner 2 is provided with free outs 6 for providing adequate space for the spray 8 or jet from the injector 4.

The feed conduit 9 is used for providing lubricant for injection and for driving part of an internal hydraulic pumping system of the injector 4. The feed conduit 9 provides lubricant at pressures that toggle between two levels of pressure, for simplicity called herein a high pressure level and a low pressure level, in order to activate an internal hydraulic pumping system inside the injector 4 when the pressure is at the high pressure level. Alternatively, it is possible to provide the hydraulic pressure for the pumping system and the lubricant for injection in separate feed conduits, as will be explained below in more detail.

The term high and low pressure is used for pressure levels above and below a predetermined pressure, which is the pressure necessary to open an outlet valve system at the nozzle for ejection of the lubricant into the cylinder 1 of the engine.

In addition to the feed conduit 9, the injectors 4 are connected to the controller 11 by an actuator conduit 10. Similarly to the feed conduit, the actuator conduit 10 provides oil at pressures that toggle between two levels of pressure, for simplicity called herein a high pressure level and a low pressure level, in order to additionally activate the internal hydraulic pumping system inside the injector 4 when the pressure is at the high pressure level, which also will be explained in more detail in the following. The high level oil pressure in the actuator conduit 10 is provided by pressurised lubricant, for example from the lubricant circuit in the engine. Alternatively, the oil pressure in the actuator conduit 10 is provided by pressurised servo oil obtained from a different pressurised oil source than the lubricant for the injection.

The controller 11 is connected to a supply conduit 12 for receiving lubricant from a lubricant supply 38, including an oil pump, and a return conduit 13 for return of lubricant, typically to an oil reservoir, optionally for recirculation of lubricant. The lubricant pressure in the supply conduit 12 is higher than the pressure in the return conduit 13, for example at least two times higher. Typically, the lubricant pressure in the return conduit 13 is in the range of 1-15 bar, for example in the range of 5-15 bar, and the lubricant pressure in the supply conduit 12 is in the range 20-100 bar, for example in the range 30-80 bar, optionally 50-80 bar.

The controller 11 supplies lubrication oil to the injectors 4 in precisely timed pulses, which are synchronised with the piston motion in the cylinder 1 of the engine. For example, for the synchronisation, the controller system 11 is electronically by wires or wireless connected a computer 11' which controls components in the controller 11 for the lubrication supply and/or used to set parameters for injection by the controller 11. Alternatively, the computer 11' is part of the controller 11, for example provided inside a single casing with the other components of the controller 11. Optionally, the computer monitors parameters for the actual state and motion of the engine, for example speed, load, and position of the crankshaft, as the latter reveals the position of the pistons in the cylinders.

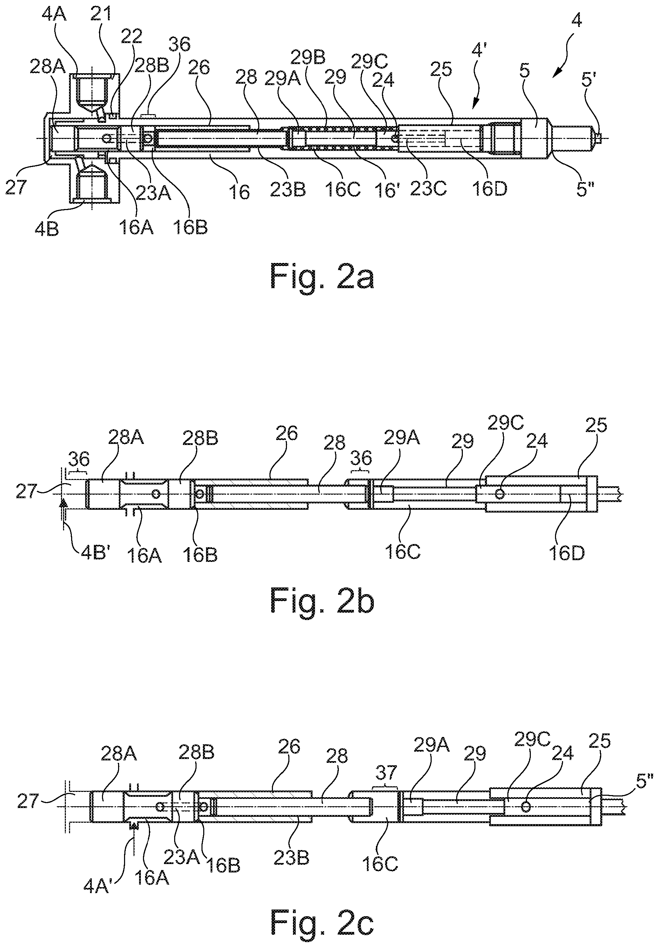

FIG. 2 illustrates an injector 4, where FIG. 2a is an overview image, FIG 2b illustrates a first injection step, and FIG. 2c illustrates a second injection step. The dimensions are not necessarily to scale.

The injector 4 comprises an injector housing 4' with an injector base 21 having an inlet port 4A for receiving lubricant from the feed conduit 9 and an actuator port 4B connected to the actuator conduit 10 for activating a first step of the hydraulic pump causing ejection of a first portion of lubricant by the injector 4.

A flow chamber 16, as part of the injector housing 4', holds the nozzle 5 relatively to the injector base 21. In the shown embodiment, the flow chamber 16 is provided as a hollow rigid rod. This hollow rigid rod extends through the wall of the cylinder 1 when mounted in the engine, such that the nozzle 5 is inside the cylinder 1, and the base is outside the cylinder 1.

The flow chamber 16 is sealed against the injector base 21 by an O-ring 22 and held tightly against the injector base 21. A conduit 16' is provided as a hollow channel inside the flow chamber 16 from the rear to the front of the flow chamber 16. The conduit 16' communicates with the inlet port 4A and with the nozzle 5 through a rear chamber 16A, a first intermediate chamber 16B, a second intermediate chamber 16C, and front chamber 16D.

The injector 4 comprises an outlet-valve system 15 for regulating the lubricant that is dispensed through the nozzle aperture 5'. Only if the pressure level exceeds the aforementioned predetermined pressure at the outlet-valve system 15 the outlet-valve system 15 opens for ejection of the lubricant into the cylinder 1 of the engine. In the embodiment of FIG. 2, the outlet-valve system 15 is exemplified as being part of the nozzle 5, although, this is not strictly necessary.

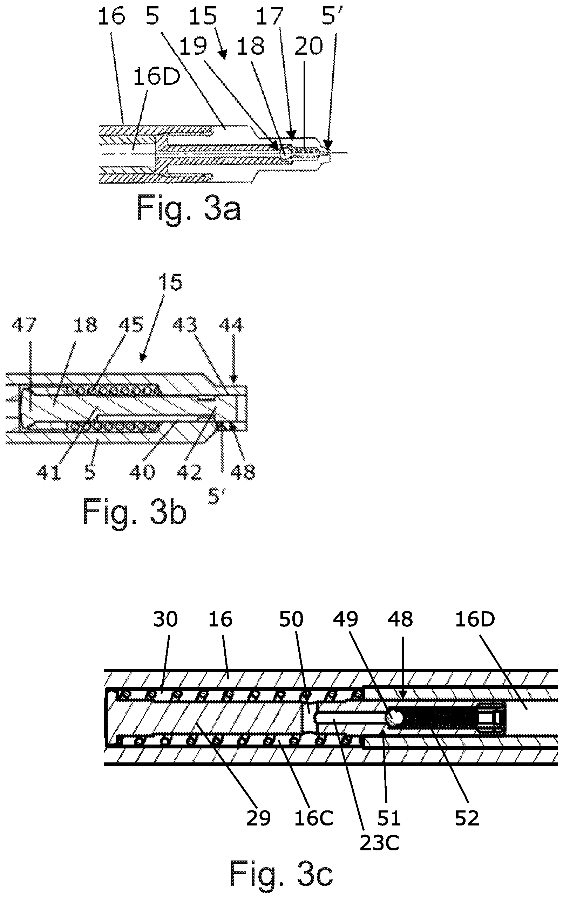

An example of an outlet-valve system 15 is described with reference to in FIG. 3a. The outlet-valve system 15 comprises a non-return outlet-valve 17. In the non-return outlet-valve 17, an outlet-valve member 18, exemplified as a ball, is pre-stressed against an outlet-valve seat 19 by an outlet-valve spring 20. Upon provision of pressurised lubricant at elevated level in the front chamber 16D, the pre-stressed forced of the outlet-valve spring 20 is counteracted by the lubricant pressure, and when the pressure gets higher than the spring force, the outlet-valve member 18 is displaced from its outlet-valve seat 19, and the non-return outlet-valve 17 opens for injection of lubricant through the nozzle aperture 5' into the cylinder 1.

As exemplified in FIG. 3a, the outlet-valve spring 20 acts on the outlet-valve member 18 in a direction away from the nozzle aperture 5'. However, the configuration could be different with respect to the direction of the force of the outlet-valve spring 20 on the outlet-valve member 18 relatively to the nozzle aperture 5', as long as the outlet non-return valve 17 is closing for the supply of lubricant to the nozzle aperture 5' when in an idle state between injection phases. The closing of the non-return outlet-valve 17 in an idle state prevents unintended flow of lubricant from the front chamber 16D through the nozzle aperture 5' into the cylinder 1 between injection phases.

FIG. 3b illustrates a second, alternative embodiment of an outlet-valve system 15. The generalised principle of the outlet-valve system 15 is similar to the one disclosed in WO2014/048438. This reference also provides additional technical details as well as explanations to the functioning of the injector presented here, which are not repeated here, for convenience. A nozzle aperture 5' is provided in the nozzle 5 tip for ejection of lubrication oil. Inside a cavity 40 of the nozzle 5, an outlet-valve member 18 is provided, the outlet-valve member 18 comprising a stem 41 and a cylindrical sealing head 42 which is arranged slidingly in a cylindrical cavity part 43 at the nozzle tip 44. The position of the valve member 18 is pre-stressed backwards away from the nozzle tip 44 by a spring 45 and is offset forwards by oil pressure acting through a channel 46 upon the back part 47 of the stem 41, the oil pressure acting against the spring force. The nozzle aperture 5' is sealingly covered by the sealing head 42 which abuts the cylindrical cavity part 43 at the nozzle tip 44, unless the valve member 18 is pushed forward such that the sealing head 43 slides pass and away from the nozzle aperture 5' to allow lubricant oil to flow from the inner cavity 46 through the nozzle aperture 5' for ejection.

With reference to FIG. 2, the rear chamber 16A communicates with the inlet port 4A for receiving lubricant from the feed conduit 9. The rear chamber 16A communicates with the first intermediate chamber 16B through rear channel 23A. The first intermediate chamber 16B communicates with the second intermediate chamber 16C through intermediate channel 23B, which is a cylindrical opening around an actuator-member 28 and inside a stop element, which will be explained below. The second intermediate chamber 16C communicates with the front chamber 16D through front channel 23C.

For sake of convenience, the term "forward motion" is used for motion towards the nozzle aperture 5' and the oppositely directed motion away from the nozzle aperture 5' is called "rearward motion".

The front chamber 16D is emptied through the nozzle aperture 5' by forward motion of a reciprocal plunger-member 29, which is spring-loaded against the forward motion by a helical plunger-spring 29B in the second intermediate chamber 16C. The plunger-member 29 comprises a flow aperture 24 that leads into front channel 23C, which is an internal channel in the plunger-member 29, for example centrally in the plunger-member 29, as indicated.

A stationary bushing 25, exemplified as a cylinder, is provided inside the flow chamber 16 in which the front part 29C of the plunger-member 29 is slidingly arranged. The bushing 25 fits tightly around the front part 29C of the plunger-member 29 in order to prevent lubricant from leaking through a space between the inner side of the bushing 25 and the outer side of the plunger-member 29 when inside the bushing 25, so that forward movement of the plunger-member 29 towards the nozzle 5 closes the flow aperture 24 of the front channel 23C in the plunger-member 29.

The plunger-member 29 is pre-stressed in a rearward direction, which is away from the nozzle 5, by a helical plunger-spring 29BA in the second intermediate chamber 16C.

Forward motion of the plunger-member 29 is achieved by forward motion of a hydraulic actuator-member 28, which presses against the head 29A of the plunger-member 29 when the pressure chamber 27 is sufficiently pressurized. The stroke-length 36 of the actuator-member 28 is limited in the forward direction by end-stop 26, against which a shoulder-element 28B of the actuator-member 28 impacts and stops the forward motion of the actuator-member 28.

The functioning of the injector 4 is explained in the following in greater detail with reference to FIG. 2b, which for sake of illustration shows the actuator movement without the flow chamber 16. When the actuator port 4B is provided with pressurized liquid, for example oil, such as lubricant, for example in the pressure range of 20-100 bar, the pressurized liquid flows into the rear chamber 27, as illustrate by arrow 4B', and expands the volume of the pressure chamber 27 by pushing on the rear part 28A of the actuator-member 28 and moving the actuator-member 28 forward in the direction towards the nozzle 5 a distance equal to the stroke-length 36 of the actuator 28. The end-stop 26 prevents the actuator-member 28 from advancing further, which also limits the first motion of the plunger-member 29 to the distance of the first stroke. This provides a first pumping step for ejection of the first portion of lubricant from the front chamber 16D out of the nozzle aperture 5'. In the exemplified embodiment of FIG. 2, the volume of the ejected first portion is equal to the stroke-length 36 times the cross sectional area of the front part 29C of the plunger-member 29 in the front chamber 26D.

It is pointed out that the flow aperture 24 during this first pumping step is inside the bushing 25, preventing back-flow of lubricant from the front chamber 16D to the second intermediate chamber 16C. Accordingly, by the forward motion of the plunger-member 29 the lubricant in the front chamber 16D is pressurised, and only if the forward pressure reaches the predetermined pressure level at which the outlet-valve-system system 15 with the non-return outlet-valve 17 opens, lubricant is ejected from the front chamber 16D through the nozzle aperture 5' into the cylinder 1. Thus, the pressure in the pressure chamber 27 needs to be raised above the predetermined pressure level in order to overcome the predetermined pressure level at the outlet-valve-system system 15 as well as the spring-load from the plunger spring 29B.

As best seen in FIG. 2c, the actuator-member 28 and the plunger-member 29 are separate elements in order for the plunger-member 29 moving a further pumping distance 37 forward in a second pumping step for ejection of a second portion of lubricant through the nozzle aperture 5'. This is achieved by subsequently pressurizing the lubricant at the inlet port 4A, which flows into the rear chamber 16A, which is illustrated with arrow 4A'. From the rear chamber 16A, the pressurized lubricant flows through the rear channel 23A and through the first intermediate chamber 16B, which is now very small because the actuator shoulder-element 28B is abutting the end-stop 26, and the lubricant flows further from the first intermediate chamber 16B through intermediate channel 23B into the second intermediate chamber 16C. As the channel opening 24 is tightly covered by the cylindrical closing unit 25, the lubricant cannot escape from the second intermediate chamber 16C. Instead, at sufficiently high pressure, the second intermediate chamber 16C expands by pressing the plunger-member 29 further forward, which leads to ejection of a second portion of lubricant from the front chamber 16D through the nozzle aperture 5' and into the cylinder 1.

The range of motion of the plunger-member 29 is delimited by a forward plunger end-stop, which in the exemplified embodiment is provided by the plunger-member 29 abutting a narrowing section 5" of the nozzle 5, as illustrated in FIG. 2c. Alternatively, the forward plunger end-stop is provided by the spring 29B when fully compressed, or by the head 29A abutting the bushing 25.

At the end of the injection phase, the pressure liquid in the pressure chamber 27 is drained out of the pressure chamber 27 through the actuator port 4B, and also the pressurized lubricant is drained out through the inlet port 4A, which causes the plunger-spring 29B to press back the actuator-member 28 and the plunger-member 29 to their most rearward start position in a direction away from the nozzle 5. The retraction in the rearward motion of the plunger-member 29 reduces the pressure in the front chamber 16D to a very low pressure where oil and potentially trace amounts of water in the lubricant evaporate. This state commonly called vacuum, although the volume is filled with evaporated liquid. When the plunger 29 is fully retracted, the front channel 23C is opened again by the plunger-member 29 being moved the flow aperture back out of the bushing 25. As soon as flow aperture 24 is pulled sufficiently backwards to come free of the bushing 25, lubricant is drawn from the second intermediate chamber 16C into the front chamber 16D to refill it again through the front channel 23C. During this returning motion of the actuator-member 28 and plunger-member 29, lubricant in the second intermediate chamber 16C is replenished from the first intermediate chamber 16B, which is turn is filled by lubricant from the rear chamber 16A that received the lubricant through the inlet port 4A.

As an alternative to the combination of flow aperture 24 and bushing 25, a different chamber-valve system can be employed, for example a suction valve, which closes when the plunger-member 29 is driven forward and which closes when the plunger-member 29 is pulled back.

FIG. 3c illustrates an example of a suction valve 48 as an alternative to the plunger-member's 29 flow-passage 24 that closes off internal channel 23C of the plunger-member 29 when it slides inside the bushing 25. The suction valve 48 in FIG. 3c comprises a ball member 49 which is pressed against the ball valve seat 51 during forward motion of the plunger-member 29 and thereby closes for passage of lubricant from the front chamber 16D to the second intermediate chamber 16C. Optionally but not necessarily, the ball 35 is pre-stressed by a spring 52 against a valve seat 51 in the front chamber 16D. During retraction of the plunger-member 29, the suction force created on the front chamber 16D by the retraction will displace the ball 49 from the seat 51 and open for flow from the second intermediate chamber 16C to the front chamber 16D through the transverse passage 50 and the internal channel 23C of the plunger-member 29.

In order for the flow aperture 24 to come free of the tight bushing 25, the plunger-member 29 and the actuator-member 28 have to be retracted to their most rearward position. Thus there is a possibility to eject one portion only or two subsequent portions before full retraction again. This first mode of function is only possible if the actuator port 4B and the connected pressure chamber 27 are pressurised first in order to move the plunger-member 29 forward and close flow aperture 24 in the bushing 25.

However, if the inlet port 4A receives pressurised lubricant before the pressure chamber 27 is pressurised, the flow aperture 24 is not closed, and pressurised lubricant from the inlet port 4A will fill the front chamber 16D through flow aperture 24 and front channel 23C, and if the pressure is above the predetermined pressure limit at which the outlet-valve opens, there will be a constant flow of pressurised lubricant through the injector 4 from the inlet port 4A and out of the nozzle aperture 5' as long as the inlet port 4A is provided with pressurised lubricant above the predetermined pressure level. This is a second mode of function of the injector (4), where the injection volume is determined by the injection time.

In principle, the injector 4 can be provided with lubricant at the inlet port 4A from one lubricant source and with pressure-oil or other pressure-liquid from an entirely different source at the actuator port 4B. However, typically, for sake of simplification and convenience, the pressure-oil at the actuator port 4B is provided from the same source as the lubricant at the inlet port 4A.

In the following, an example is given where the lubricants at the inlet port 4A and at the actuator port 4B are alternatingly pressurised from a first pressure level to a second pressure level and back. The first pressure level is a pressure level below the predetermined pressure level at which lubricant is injected through the outlet-valve system 15 into the cylinder 1 and is for sake of simplicity and illustration is called "low pressure". The second pressure level is a pressure level above the predetermined pressure level and is for sake of simplicity and illustration called a "high pressure".

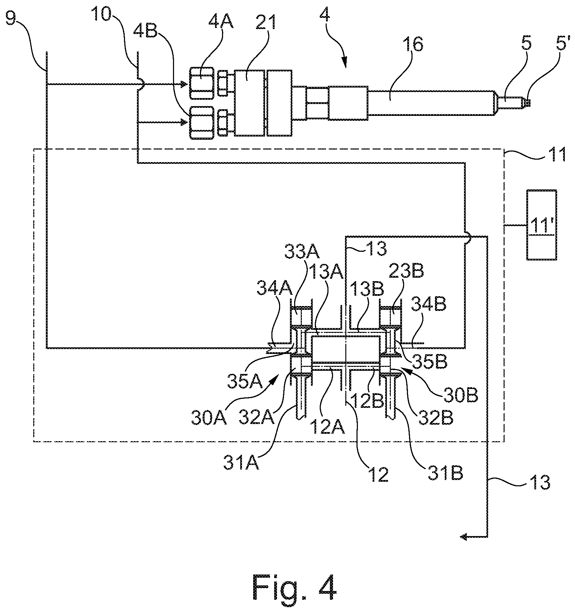

It is explained in the following with reference to the controller 11, which is illustrated in FIG. 4. It is pointed out however, that the controller in FIG. 4 is only an exemplified embodiment, and the injector of FIG. 2 is independent of the illustrated controller of FIG. 4 and can function with other types of controllers 11.

FIG. 4 illustrates an embodiment of the controller 11 connected to an injector 4, which is exemplified with a slightly different outer configuration but which has the features as described in relation to FIG. 2.

The controller 11 comprises a double valve system with a first valve 30A and a second valve 30B, each being provided with an inlet port 12A, 12B, connected to the supply conduit 12 for receiving lubricant at high pressure, for example at a pressure in the range of 30 to 100 bars, and with a return port 13A, 13B connected to the return conduit 13. The pressure in the return conduit 13 is lower, for example at least two times lower, than the pressure in the supply conduit 12. For example, the pressure is in the range of 5-10 bar.

The first valve 30A has an outlet port 34A that is connected to the feed conduit 9 for communication with the inlet port 4A of the injector 4. The second valve 30B has an outlet port 34B that is connected to the actuator conduit 10 for communication with the actuator port 4B of the injector 4.

Each of the first and second valve 30A, 30B comprises a valve member 31A, 31B with a first closure member 32A, 32B and a second closure member 33A, 33B, between which a valve chamber 35A and 35B is provided.

Each of the valve members 31A, 31B is reciprocally toggling between a first position in a first state of the respective valve 30A, 30B, in which the valve chamber 35A, 35B communicates with the respective inlet port 12A, 12B and the outlet port 34A, 34B, and a second position in a second state, where the valve chamber 35A, 35B communicates with the outlet port 34A, 34B and the return port 13A, 13B, the latter state being illustrated in FIG. 3 for both valves 30A, 30B. The two valve members 31A, 31B are provided such that they can toggle independently from each other. For example, the movement of the valve members 31A, 31B between the first and second position is caused by magnetic force provided by an electromagnet.

Typically, parameters for controlling the valves 30A, 30B are set by using the computer 11'. For example, the computer is by wires or wireless connected to the controller 11. Alternatively, the computer 11' is part of the controller 11. Optionally, the computer 11' is also electronically connected to sensors in the engine in order to monitor parameters for the actual state and motion of the engine, as already mentioned above. In the case that multiple controllers 11 are used for the engine, or even multiple controllers 11 for each cylinder, the controllers 11 would, typically, share a single computer 11', although this is not strictly necessary.

A lubrication cycle is explained in the following. The terms "low pressure" and "high pressure", as already mentioned above, will be used for sake of simplicity and illustration for differentiating between the pressure levels in the return conduit 13 and the pressure level in the supply conduit 12, in which the lubricant has a higher pressure than in the return conduit 13. The pressure in the return conduit 13 and the pressure in the supply conduit 12 are, respectively, lower and higher than the predetermined pressure level at which the outlet-valve 15 opens for injection into the cylinder 1. The "low pressure" in the return conduit is also lower that the pressure needed to counteract the spring-load on the plunger 29 by the plunger spring 29B. In turn, the "high pressure" is at least equal to the pressure necessary to overcome the spring-load by the plunger spring 29B and the predetermined pressure level of the outlet-valve system 15. The low pressure, high pressure, predetermined pressure level, and the spring-load are correspondingly adjusted.

In the illustrated state of the two valves 30A, 30B in FIG. 4, the two valve members 31A, 31B are each in the first positions, and the first valve 30A is connecting the return conduit 13 with the inlet port 4A through feed conduit 9, and the second valve 30B is connecting the return conduit 13 with the actuator port 4B through the actuator conduit 10. Accordingly, both ports 4A, 4B are provided with lubricant at low pressure. The low pressure is adequate for filling the lubricant conduit 16' in the injector 4, in particular the front chamber 16D from which the lubricant is going to be ejected through the nozzle aperture 5' in the injection phase. However, the low pressure is not sufficient for pressing the actuator-member 28 and the plunger-member 29 forward towards the nozzle 5. As already mentioned, the spring-load on the plunger-member 29 keeps both the actuator-member 28 and the plunger-member 29 in the most rearward position, and the flow aperture 24 of the front channel 23C in the plunger-member 29 is free from the bushing 25 and open for flow of lubricant from the inlet port 4A through the front channel 23C into the front chamber 16D.

For a two-step injection, the following procedure is used.

While the first valve 30A remains in the first state, as it is illustrated for the first valve 30A in FIG. 4, the second-valve 30B is shifted from the illustrated first state to its second state where the corresponding second-valve member 31B is no longer closing off the second-valve inlet port 12B, as indicated in FIG. 4, but closes off the second-valve return port 13B instead. Accordingly, the supply conduit 12 gets connected to the actuator port 4B by communication through the second-valve inlet port 12B, the second-valve chamber 35B, the second-valve outlet port 34B, and the actuator conduit 10. As a result, the lubricant at the actuator port 4B gets pressurised, filling the pressure chamber 27 and pushing the actuator-member 28 together with the plunger-member 27 forward until the actuator-member 28 hits the end-stop 26, and the first portion of lubricant is ejected from the front chamber 16D into the cylinder 1 through the nozzle aperture 5' by the forward motion of the plunger-member 29, as explained above in connection with FIG. 2b.

Subsequently, while the second valve 30B remains in the second state, the first-valve 30B is shifted from the first state to its second state where the corresponding first-valve member 31A is no longer closing off the first-valve inlet port 12A, as indicated in FIG. 4, but closes off the first-valve return port 13A instead. Accordingly, the supply conduit 12 gets connected to the inlet port 4A by communication through the first-valve inlet port 12A, the first-valve chamber 35A, the first-valve outlet port 34A, and the feed conduit 9. As a result, the lubricant at the inlet port 4A gets pressurised, pressurising the rear chamber 16A, the first intermediate chamber 16B, and the second intermediate chamber 16C and pushes the plunger-member 29 further forward, so that the second portion of lubricant is ejected from the front chamber 16D into the cylinder 1 through the nozzle aperture 5', as explained above in connection with FIG. 2c.

When the second injection phase with ejection of lubricant through the nozzle aperture 5' has finished, both valve-members 31A, 31B are returned to the first state, as illustrated in FIG. 4, such that the inlet port 4A and the actuator port 4B are again at low pressure. The spring-load on the plunger-member 29 dominates the force again, and the plunger-member 29 and the actuator-member 28 are retracted to their most rearward position. The flow aperture 24 of the front channel 23C in the plunger-member 29 becomes free again from the bushing 25 and opens for flow of lubricant from the inlet port 4A through the intermediate chamber 16C and through the front channel 23C into the front chamber 16D. From this state, the next injection phase can start.

It is pointed out that the second injection phase is purely optional and can be avoided by returning the second valve 30B to the first state without switching the first valve 30A from the first to the second state.

As a further feature, in a different injection mode, it is possible to cause injection by switching only the first valve 30A from the first to the second state, while the first second valve 30B remains in the first state. In this case, the pressure on the pressure chamber 27 behind the rear part 28A of the actuator 28 stays at low pressure so that the actuator 28 is not pushed forward. Accordingly, the flow aperture 24 is not pushed into the bushing 25 and the front channel 23 is not closed. The pressurized lubricant from the inlet port 4A is instead pumped through the entire lubricant conduit 16' including the front channel 23C into the front chamber 16D. As the pressure of the lubricant is high, the outlet-valve system 15 is opened, and lubricant injected into the cylinder as long as the first valve 30A is in the second state. The volume of the lubricant injected into the cylinder then depends on the size of the nozzle aperture 5', on the pressure and viscosity of the lubricant, and on the time for which the first valve 30A remains in the second state. This mode of injection is potentially used for testing or for injecting especially high amounts of lubricant into the cylinder, which is customary during the first time, a new cylinder is started after repair or, potentially, even when an engine is started from cold conditions. By varying the pressure of the lubricant from the lubricant feed conduit to the inlet port 4A, the injection rate can be controlled in this mode of action. For example, an adjustable pressure valve is inserted in the feed conduit 9.

As it is explained above, the two-step function of the pumping mechanism provided by the step-wise advance of the plunger-member 29 secures a precise dosing of the volume of the injected lubricant in an injection phase, where it is recalled that the two-step injection is an option, and a one-step injection, caused by the advancing of the actuator only, is also an option.

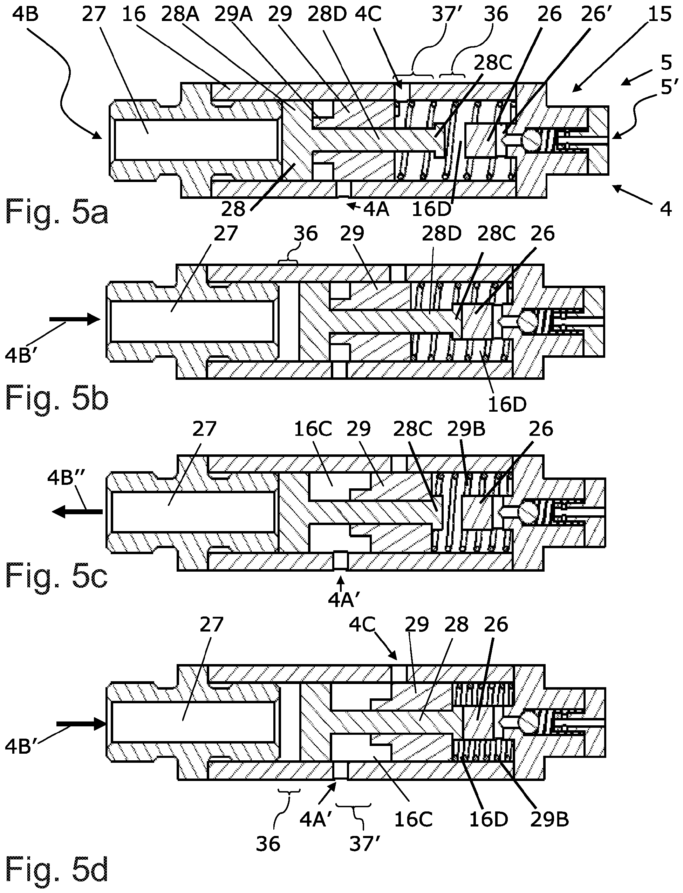

FIG. 5 illustrates a modified system in which a three-step injection is possible, in addition to the constant flow mode when only an additional inlet port 4C is pressurized, the additional inlet port 4C directly communicating with the front chamber 16D.

The drawings are only stylistic, not to scale, and shows only some main parts of the injector 4 for the sake of explaining the principle. A similar notation is used in FIG. 5 as it is above for FIG. 2.

As illustrated in FIG. 5a, the injector 4 comprises an additional inlet port 4C from which the front chamber 16D is filled with lubricant. If the lubricant at the additional inlet port 4C is provided at high pressure, so that the predetermined pressure level for opening the outlet-valve system 15 is surpassed, a constant release of lubricant through the front chamber 16D and out of the nozzle 5 is provided. If the lubricant at the additional inlet port 4C is lower than the predetermined pressure level of the outlet-valve system 15, the front chamber 16D will be filled only, ready for being ejected by pressure from the plunger-member 29.

Similar to the injector 4 of FIG. 2, the injector 4 in FIG. 5 comprises an actuator port 4B from which a pressure chamber 27 is filled with pressure-liquid, for example pressurised lubricant as explained in the above examples. The pressure-liquid in the pressure chamber 27 exerts pressure on the rear-part 28A of the actuator-member 28. When the pressure in the pressure chamber 27 rises above the predetermined pressure level of the outlet-valve system 15, the actuator-member 28 is displaced towards the nozzle 5, as illustrated in FIG. 5B. As the actuator-member 28 pushes onto the head 29A of the plunger-member 29, also the plunger-member 29 is displaced towards the nozzle 5, and a first portion of lubricant is ejected from the front chamber 16D, corresponding to the stroke-length 36 of the actuator-member 28.

It is observed in FIG. 5b that the plunger-member 29 is pushed past the additional inlet port 4C which is closed therewith. As illustrated, the additional inlet port 4C gives access to the front chamber 16D for refill by being provided closer to the nozzle aperture 5' than the plunger-member 29 when in its fully retracted position. On the other hand, it is provided within the range of positions in the flow chamber 16 that the plunger-member 29 is covering when offset from the most rearward position. Alternatively, the additional inlet port 4C comprises a closure valve, for example a non-return valve (not shown), that is preventing lubricant to leave the front chamber 16D through the additional inlet port 4C. In the latter case, the additional inlet port 4C is optionally provided closer to the nozzle aperture 5', for example at a position of the front chamber 16D, where also the stop member 26 is provided.

As best seen in FIG. 5a and FIG. 5B, the actuator-member 28 comprises an actuator-stem 28D that extends through the centre of the plunger-member 29 and has a front part 28C that extends more forward towards the nozzle aperture 5' than the plunger-member 29 itself. The plunger-member 29 is arranged slidingly on the actuator-stem 28D. When the actuator-member 28 is moving forward, the front part 37 of the actuator-member 28 hits the end-stop 26, which stops the forward movement of the actuator-member 28 as well as the plunger-member 29. In this function, the end-stop 26 is not only an end-stop for the actuator-member but also for the plunger-member 29. The stroke-length 36 of the actuator-member 28 and the plunger-member 29 is defined by the distance between end-stop 26 and the front part 37 of the actuator-member 28, when the actuator-member 28 is in the idle state between injection phases.

FIG. 5C and in FIG. 5D, situations are illustrated in which the inlet port 4A is used for pressing the plunger-member 29 forward when inserting pressure liquid 4A' through the inlet port 4A and into the intermediate chamber 16C.

Starting with the situation of FIG. 5D, the actuator-member 28 is held at the position against the end-stop 26 while the intermediate chamber 16C is filled with pressure liquid, for example pressurised lubricant, through the inlet port 4A which pushes the plunger-member 29 further forward, which reduces the volume of the front chamber 16D, and a further portion of lubricant is injected into the cylinder 1 through the nozzle aperture 5'.

With reference to FIG. 5d, the following is pointed out. In order for the pressure-liquid in the intermediate chamber 16C not to leave the intermediate chamber 16C through the additional inlet port 4C, a non-return valve (not shown) is optionally provided at the additional inlet port 4C.

For the first injection step, the plunger-member 29 is moved forward by the actuator-member 28, until the actuator-member 28 comes to rest against the end-stop 26. For the second injection step, the plunger-member 29 is moved further forward by injecting pressure-liquid into the intermediate chamber 16C. These two steps are in principle similar to the ones explained in relation to FIG. 2.

However, in the embodiment of FIG. 5, there is an additional option, as explained with reference to FIG. 5c. In this case, after the actuator-member 28 has been moved forward against the end-stop 26, as illustrated in FIG. 5b, the insertion 4A' of pressure liquid into the intermediate chamber 16C through inlet port 4A is done simultaneously with a drain 4B" of the pressure chamber 27. The actuator-member 28 moves back from the end-stop 26 to its most rearward position, as illustrated in FIG. 5c, while the plunger-member 29 moves forward due to the pressure in intermediate chamber 16C, until it comes to rest against the shoulders of front stopper 28C of the actuator-member 28, where also the front stopper 28C acts as an intermediate end-stop for the plunger-member 29. Forward movement of the plunger-member 29 despite the actuator-member 28 moving backwards is possible because the length 37 of the free motion of the plunger-member 29 on the actuator-stem 28D is larger than the stroke-length 36 of the actuator-member 28, which is best when comparing the position of the plunger-member 29 in FIG. 5b with the position in FIG. 5c.

Once, the intermediate chamber 16C has been filled and the pressure chamber 27 drained, which is illustrated in FIG. 5c, the pressure chamber 27 can be filled again, and the actuator-member 28 moved forward together with the plunger-member 29, until the front stopper 28C. This leads to a third injection.

The setup of FIG. 5 gives several options for injection before retraction:
A) Moving the actuator-member 28 and the plunger-member 29 the stroke-length 36 forward, corresponding to the situation in FIG. 5b. Then, retracting the actuator-member 28 and the plunger-member 29 again by the plunger-spring 29B and waiting for the next injection.
B) Instead of merely retracting the actuator-member 28 as in option A above, draining pressure-liquid from pressure chamber 27 through actuator port 4B and thereby retracting actuator-member 28 over the stroke-length 36 while simultaneously filling the intermediate chamber 16C, which moves the plunger-member 29 further forward by the difference between the range of motion 37' of the plunger-member 29 on the actuator stem 28D and the stroke-length 36 of the actuator-member 28. This situation is illustrated in FIG. 5C, and leads to not only the first but also the second injected portion. Then, draining intermediate chamber 16C again and retracting the actuator-member 28 and the plunger-member 29 again by the plunger-spring 29B and waiting for the next injection.
C) Instead of retracting the actuator-member 28 and the plunger-member 29 after the injection of the two portions, as in option B above, a third portion is injected through actuator port 4B by filling the pressure chamber 27 again, leading to the situation as illustrated in FIG 5d.
D) Instead of retracting the actuator-member 28 as in option A above, keeping the actuator-member at the end-stop 26 and pressurising intermediate chamber 16C through inlet port 4A for pushing the plunger-member forward. This results in the situation of FIG. 5d, when taking offset in FIG. 5B, however, without the intermediate step FIG. 5c. The result is also two-portion injection, however, the second portion is larger than in option B.
E) Simultaneously injecting pressure liquid in pressure chamber 27 and in intermediate chamber 16C so that the two portions of the option D are injected simultaneously.
F) Pressurising the lubricant at additional inlet port 4C and constantly injecting lubricant through the front chamber 16D and the outlet-valve system 15 into the cylinder, until the pressure is lowered again. The injected volume is determined by the time length of the injection, apart from other parameters, such as nozzle aperture size, pressure, and viscosity.

Thus, there are at least six modes for injection by this setup with three ports 4A, 4B, and 4C, as illustrated in FIG. 5. The pressurization of the three ports 4A, 4B, and 4C can be achieved in a similar way as illustrated in FIG. 3 in relation to only two ports. Merely a third valve is added.

In addition, further degrees of freedom can be achieved, by varying the pressure in the pressure chamber 27 between a lower pressure level, where the plunger spring 29B is able to push the plunger-member 29 fully back to the most rearward position of the actuator, as illustrated in FIG. 5b, and an upper level, which is the predetermined pressure level of the outlet-valve system for injection. A pressure can be found in between that will balance the rear part 28A of the actuator 28 between the most rearward position and the most forward position, where the latter is against the end-stop 26. This is possible because the force of the plunger springs 29B is varying in dependence on the compression length, largely following a linear dependence on the displacement of the actuator-member from the most rearward position.

When using toggle valve of the type as illustrated in FIG. 3, such pressure variation for varying the offset of the actuator-member 28 from the most rearward position can be achieved by inserting a pressure valve in the path between the actuator port 4B and the return conduit 13. The pressure valve would keep the pressure above the normal low pressure draining level when draining the pressure chamber 27.

Alternatively or in addition, also the pressure in the intermediate chamber 16D can be provided variable in order to balance the plunger-member 29 at varying positions on the range of motion 37' against the spring load from the plunger-spring 29B. For example, both the pressure chamber 27 and the intermediate chamber 16D are provided with adjustable pressure such that the lubrication system can vary between predetermined step-wise injection volumes and injection portions that are variably smoothly adjustable.

The variable systems are more sophisticated and comprise more logic than the step-wise injection systems. For this reason, the described injection system is useful as a basic version with the step-wise injection and an advanced and more expensive version with both step-wise injection and variable injection.

The following values are non-limiting illustrative examples of possible working pressures. The pressure in the return conduit 13 and the feed conduit 9 is 10 bar. The pressure in the supply conduit 12 is 50 bars. The outlet-valve 15 opens at 37 bar, such that the lubricant is injected at 37 bars. The plunger-spring 29B is configured for pressing the plunger-member 29 and the actuator-member 28 fully back to the rearmost position if the pressure at the actuator port 4B in the idle state between injection phases is 10 bar. Thus, the 50 bars in the supply conduit are sufficiently high to not only surpass the 37 bar of the predetermined pressure level but also the spring-load.

In the case of the adjustable pressure option, the pressure-valve is adjustable to a pressure of between 10 and 30 bars, well below the 37 bar injection pressure but high enough to provide high enough pressure in the pressure chamber 27 for the actuator-member 28 not returning fully to the most rearward position during draining but keeping a distance from the most rearward. By adjusting this distance through adjustment of the pressure in the range of 10-30 bar, the injection volume in the front chamber 16D is adjusted, because the forward motion in the injection phase is smaller the more the plunger-member 29 is offset from the most rearward position at the start of the injection phase. Similar arguments are valid in case that the intermediate chamber 16C, alternatively or in addition, is provided with a variable pressure option.

Optionally the injection volume is controlled by a flow meter inserted in the feed conduit 9, either for the group of injectors or for each single injector 4. The flow meter measures flow (mass and/or volume) and is then used for control that the injector(s) is/are properly working.

The injection system with the injector 4 as described above and the controller 11 are simple to install and replace. It is a relatively low-cost technical solution, albeit robust and stable. Especially, the injection volume is precisely adjustable due to the pumping system inside the injector 4, excluding uncertainty factors outside the injector 4, such as compression of lubricant in long pipes and expansion of the pipes themselves, as was discussed above. Especially, the step-wise injection safeguards precise volumes for the injection. Also, the system does not comprise electrical wires to and from the injector 4, which makes it robust against heat, whereas electrical wires are likely to have an insulation layer that melts in heat.

### Reference numbers

1 cylinder
2 cylinder liner
3 cylinder wall
4 oil injector
4' injector housing
4A inlet port of oil injector 4
4B actuator port of oil injector 4
4C additional inlet port (only in FIG. 5)
5 nozzle
5' nozzle aperture
5" narrowing section of the nozzle
6 free cut in liner
7 atomised spray from a single injector 4
8 swirling spray
9 feed conduit
10 actuator conduit
11 controller
11' computer
12 supply conduit
12A, 12B valve inlet port of first and second valve 30A, 30B, respectively
13 return conduit
13A, 13B return port of first and second valve 30A, 30B, respectively
14 swirl in cylinder
15 outlet-valve system of injector 4
16 flow chamber connecting inlet-valve system 13 with outlet-valve system 15
16' hollow part of flow chamber 16 forming a lubricant conduit
16A rear chamber
16B first intermediate chamber
16C second intermediate chamber
16D front chamber
17 non-return outlet-valve, exemplified as outlet ball valve
18 outlet-valve member, exemplified as ball
19 outlet-valve seat
20 outlet-valve spring
21 injector base
22 O-ring at end of flow chamber 16
23A rear channel in actuator-member 28 connecting rear chamber 16A with first intermediate chamber 16B
23B intermediate channel between first and second intermediate chamber 16A, 16B
23C front channel in plunger-member 29 between second intermediate chamber 16B and front chamber 16D
24 flow aperture into front channel 23C
25 cylindrical bushing around front part 19A of plunger-member 29
26 end-stop
27 pressure chamber at rear part 28A of actuator-member 28
28 actuator-member for pushing head 29A of plunger-member 29
28A rear part of actuator-member 28
28B shoulder-element of actuator-member 28
28C front stopper of actuator-member (in FIG. 5)
28D slider of actuator-member 28 (actuator stem in FIG. 5)
29 plunger-member
29A head of plunger-member 29
29B plunger-spring in second intermediate chamber 16C
29C front part of plunger-member 29
30A,30B first and second toggle valve, respectively
31A, 31B toggle valve member of first and second toggle valve 30A, 30B, respectively
32A, 32B first closure member of first and second valve 30A, 30B, respectively
33A, 33B second closure member of first and second valve 30A, 30B, respectively
34A, 34B outlet port of first and second valve 30A, 30B, respectively
35A, 35B valve chamber of first and second valve 30A, 30B, respectively
36 stroke-length of actuator-member 28
37 distance of motion of plunger-member 29 in second injection step (FIG. 2)
37' range of motion of the plunger-member 29 on the slider 28D (actuator stem in FIG. 5)
38 lubricant supply
40 cavity
41 stem
42 cylindrical sealing head
43 cylindrical cavity part
44 nozzle tip
45 spring
46 channel
47 back part 47 of the stem 41
48 suction valve in plunger-member 29
49 ball member pre-stressed against valve seat 51 in suction valve 48
50 transverse passage in plunger-member 29
51 valve seat for ball member
52 spring against ball member 49

## Claims

1. An injector for a large slow-running two-stroke engine, the injector (4) comprising
- a nozzle (5) with a nozzle aperture (5') for extending into the cylinder (1) and injecting lubricant into the cylinder (1) in the injection phase;
- an outlet-valve system (15) at the nozzle (5) for opening and closing for flow of lubricant to the nozzle aperture (5') during an injection cycle; the outlet-valve system (15) comprising a non-return outlet-valve (17) arranged for opening for lubricant flow to the nozzle aperture (5') upon pressure rise above a predetermined pressure level at the non-return outlet-valve (17) in the injection phase;
- a front chamber (16D) for containing lubricant and communicating with the outlet-valve system (15) and being configured for ejection of at least a portion of the lubricant in the front chamber (16D) through the outlet-valve system (15) upon pressurization of the front chamber (16D) in the injection phase;
**characterized in that** the injector comprises a hydraulic-driven multi-step piston-based pumping-system, the pumping-system comprising a hydraulically-driven plunger-member (29), and wherein the pumping-system is configured for driving the plunger-member (29) in multiple consecutive steps before retraction of the plunger-member (29) for pressurising the lubricant inside the front-chamber (16D) to above the predetermined limit in each of such multiple steps for consecutive injection of multiple predetermined portions of lubricant from the front chamber (16D) through the outlet-valve system (15) and the nozzle aperture (5') into the cylinder (1) before retraction of the plunger-member (29) and refilling of lubricant into the front chamber (16D).

2. An injector according to claim 1, wherein the pumping-system comprises a hardware end-stop (26, 5", 28C) for delimiting a range of motion of the plunger-member (29) in each of the multiple steps of the plunger-member (29).

3. An injector according to claim 2, wherein the injector (4) comprises
- an actuator port (4B) for flow-connection to an actuator conduit (10) and a pressure chamber (27) in communication with the actuator port (4B) for receiving a first portion of pressure liquid from the actuator conduit (10) through the actuator port (4B) in the injection phase, the first portion of pressure liquid having a pressure above the predetermined pressure level;
- a reciprocal hydraulic-driven actuator-member (28) in contact with the pressure chamber (27) and being configured for being driven a predetermined stroke-length (36) in a direction towards the nozzle aperture (5') by the first portion of pressure-liquid in the pressure chamber (27) in the injection phase;
- a reciprocal plunger-member (29) in contact with the front chamber (16D) and configured for being driven by the actuator-member (28) the stroke-length towards the nozzle (5) in the injection phase for causing pressure rise in front chamber (16D) and for pumping a first predetermined lubricant volume, defined by the stroke-length (36), from the front chamber (16D) through the non-return outlet-valve (17) and the nozzle aperture (5') into the cylinder (1) as a first injection step,
- an inlet port (4A) for flow-connection to a feed conduit (9) and an intermediate chamber (16C) in communication with the inlet port (4A) for receiving a second portion of pressure-liquid from the feed conduit (9) through the inlet port (4A) in the injection phase, the second portion of pressure liquid having a pressure above the predetermined pressure level; wherein the reciprocal plunger-member (29) is in contact with the intermediate chamber (16C) and configured for being hydraulically driven a predetermined distance of motion (37) by the second portion of pressure liquid for pumping a second predetermined lubricant volume, defined by the distance of motion (37), from the front chamber (16D) through the non-return outlet-valve (17) and the nozzle aperture (5') into the cylinder (1) as a second injection step.

4. An injector according to claim 3, wherein a chamber-valve system (24, 25, 48) is provided between the intermediate chamber (16C) and the front chamber (16D), wherein the chamber-valve system (24, 25, 48) is configured for connecting the front chamber (16D) with the intermediate chamber (16C), when opened, for flow of lubricant through chamber-valve system (24, 25, 48) from the intermediate chamber (16C) to the front chamber (16D) and configured for disconnecting the front chamber (16D) from the intermediate chamber (16C), when closed, for preventing back-flow of lubricant from the front chamber (16D) to the intermediate chamber (16C) when lubricant is expelled from the front chamber (16D) through the nozzle aperture (5') by the forward movement of the plunger-member (29) in the injection phase.

5. An injector according to claim 3 or 4, wherein the injector (4) comprises an additional inlet port (4C) for receiving lubricant for the front chamber (16D) at a pressure below the predetermined pressure.

6. An injector according to claim 5, wherein the actuator-member (28) comprises a slider (28D) on which the plunger-member (29) is arranged slidingly over the distance of motion (37) between a rear part (28A) of the actuator-member (28) and a front stopper (28D) of the actuator-member (28), and wherein the injector is configured for the actuator-member (28) moving in a direction away from the nozzle aperture (5') simultaneous with the plunger-member (29) moving towards the nozzle aperture (5').

7. A large slow-running two-stroke engine comprising a cylinder (1) with a reciprocal piston inside and with a plurality of injectors (4) distributed along a perimeter of the cylinder (1) for injection of lubricant into the cylinder (1) at various positions on the perimeter during injection phases; the engine further comprising a controller (11) for controlling the amount and timing of the lubricant injection by at least one of the injectors (4); **characterized in that**
each injector (4) is an injector according to anyone of claims 1-6.

8. An engine according to claim 7, wherein each injector is according to claim 3 and wherein the controller (11) is connected by a feed conduit (9) and by an actuator conduit (10) to the injectors (4) for supplying a first portion of pressure liquid from the actuator conduit (10) and a second portion of pressure liquid from the feed conduit (9) to the injector (4), one portion after the other, wherein
- the actuator port (4B) is flow-connected to the actuator conduit (10) and
- the inlet port (4A) is flow-connected to the feed conduit (9).

9. An engine according to claim 8, wherein the engine is configured for providing pressure liquid in the feed conduit (9) with alternating pressure between a high pressure above the predetermined pressure level, for pushing the plunger-member (29) towards the nozzle aperture (5') in the injection phase, and a low pressure below the predetermined pressure level, for retraction of the plunger-member (29); wherein the pressure liquid in the feed conduit (9) is lubricant and wherein the front chamber (16D) is configured for receiving this lubricant through the inlet port (4A) when the pressure in the feed conduit (9) is at low pressure.

10. An engine according to claim 8 or 9, wherein the engine comprises a supply conduit (12) for supplying pressurised lubricant to the controller (11) at a pressure above the predetermined pressure level; and the engine comprises a return conduit (13) for draining the pressurised lubricant from the controller (11) at a pressure below the predetermined pressure level; wherein the controller (11) comprises a valve system configured for shifting between states in which the supply conduit (12) is connected to the actuator conduit (10) and not the feed conduit (9) in a first state for the first injection step; wherein the supply conduit (12) is connected to the actuator conduit (10) and the feed conduit (9) in a second state for the second injection step; wherein the supply conduit (12) is disconnected from the actuator conduit (10) and the feed conduit (9), and the return conduit (13) is connected to the actuator conduit (10) and the feed conduit (9) in a third state for retraction of the actuator-member (28) and the plunger-member (29) after injection.

11. A method for lubricating a large slow-running two-stroke engine comprising a cylinder (1) with a reciprocal piston inside and with a plurality of injectors (4) distributed along a perimeter of the cylinder (1) for injection of lubricant into the cylinder (1) at various positions on the perimeter during injection phases; the engine further comprising a controller (11) for controlling the amount and timing of the lubricant injection by at least one of the injectors (4);
wherein each injector (4) comprises
- a nozzle (5) with a nozzle aperture (5') extending into the cylinder (1) for injecting lubricant into the cylinder (1) in the injection phase;
- an outlet-valve system (15) at the nozzle (5) for opening and closing for flow of lubricant to the nozzle aperture (5') during an injection cycle; the outlet-valve system (15) comprising a non-return outlet-valve (17) arranged for opening for lubricant flow to the nozzle aperture (5') upon pressure rise above a predetermined pressure level at the non-return outlet-valve (17) in the injection phase;
- a front chamber (16D) for containing lubricant and communicating with the outlet-valve system (15) and being configured for ejection of at least a portion of the lubricant in the front chamber (16D) through the outlet-valve system (15) upon pressurization of the front chamber (16D) in the injection phase;
**characterized in that** each of the injectors (4) comprises a hydraulic-driven multi-step piston-based pumping-system, the pumping-system comprising a hydraulically-driven plunger-member (29), and wherein the pumping-system is configured for driving the plunger-member (29) in multiple consecutive steps before retraction of the plunger-member (29) for pressurising the lubricant inside the front-chamber (16D) to above the predetermined limit in each of such multiple steps for consecutive injection of multiple predetermined portions of lubricant from the front chamber (16D) through the outlet-valve system (15) and the nozzle aperture (5') into the cylinder (1) before retraction of the plunger-member (29) and refilling of lubricant into the front chamber (16D).
wherein the method comprises
- in the first injection step, driving the plunger-member (29) by a predetermined stroke-length (36) and causing pressure rise in the front chamber (16D) above the predetermined pressure level and pumping a first predetermined lubricant volume, defined by the stroke-length (36), through the non-return outlet-valve (17) and the nozzle aperture (5') into the cylinder (1);
- in the second injection step, further driving the plunger-member (29) a predetermined distance of motion (37) and pumping a second predetermined lubricant volume, defined by the distance of motion (37), through the non-return outlet-valve (17) and the nozzle aperture (5') into the cylinder (1);
- only after completion of both the first and second injection step, retracting the plunger-member (29) and re-filling the front chamber (16B) with the lubricant for a subsequent injection.

12. A method according to claim 11, wherein the pumping-system comprises a first and a second hardware end-stop (26, 5", 28C) for delimiting a range of motion of the plunger-member (29) in each of the multiple steps; and wherein the method comprising delimiting the stroke-length (36) by the first hardware end-stop (26) and delimiting the distance of motion (37) by the second hardware end-stop (5", 28C).

13. A method according to claim 12, wherein the controller (11) is connected by a feed conduit (9) and by an actuator conduit (10) to the injectors (4) for supplying a first portion of pressure liquid from the actuator conduit (10) and a second portion of pressure liquid from the feed conduit (9) to the injector (4), one portion after the other;
wherein each injector comprises
- an actuator port (4B) flow-connected to the actuator conduit (10) and a pressure chamber (27) in communication with the actuator port (4B) for receiving the first portion of pressure liquid from the actuator conduit (10) through the actuator port (4B) in the injection phase, the first portion of pressure liquid having a pressure above the predetermined pressure level;
- a reciprocal hydraulic-driven actuator-member (28) in contact with the pressure chamber (27) and being configured for being driven a predetermined stroke-length (36) in a direction towards the nozzle aperture (5') by the first portion of pressure-liquid in the pressure chamber (27) in the injection phase;
- a reciprocal plunger-member (29) in contact with the front chamber (16D) and configured for being driven by the actuator-member (28) the stroke-length (36) towards the nozzle (5) in the injection phase for causing pressure rise in front chamber (16D) and for pumping a first predetermined lubricant volume, defined by the stroke-length (36), from the front chamber (16D) through the non-return outlet-valve (17) and the nozzle aperture (5') into the cylinder (1) as a first injection step,
- an inlet port (4A) flow-connected to the feed conduit (9) and an intermediate chamber (16C) in communication with the inlet port (4A) for receiving a second portion of pressure-liquid from the feed conduit (9) through the inlet port (4A) in the injection phase, the second portion of pressure liquid having a pressure above the predetermined pressure level; wherein the reciprocal plunger-member (29) is in contact with the intermediate chamber (16C) and configured for being hydraulically driven a predetermined distance of motion (37) by the second portion of pressure liquid for pumping a second predetermined lubricant volume, defined by the distance of motion (37), from the front chamber (16D) through the non-return outlet-valve (17) and the nozzle aperture (5') into the cylinder (1) as a second injection step;
wherein the method comprises;
- in the first injection step, providing pressure-liquid at the actuator port (4B) and inserting a first portion of pressure liquid into the pressure chamber (27), exerting force on the actuator-member (28) by the first portion of pressure liquid and driving the actuator-member (28) the stroke-length (36) towards the nozzle aperture (5'); by the actuator-member (28) driving the plunger-member (29) by the stroke-length (36) and causing pressure rise in the front chamber (16D) above the predetermined pressure level and pumping a first predetermined lubricant volume through the non-return outlet-valve (17) and the nozzle aperture (5') into the cylinder (1);
- in the second injection step, providing pressure-liquid at the inlet port (4A) and inserting a second potion of pressure liquid into the intermediate chamber (16C), exerting force on the plunger-member (29) by second portion of pressure liquid and driving the plunger-member (29) the distance of motion (37) towards the nozzle aperture (5') and pumping a second predetermined lubricant volume through the non-return outlet-valve (17) and the nozzle aperture (5') into the cylinder (1);
- after the first and second injection step, retracting the actuator-member (28) and the plunger-member (29) and re-filling the front chamber (16B) with the lubricant for a subsequent injection phase.

14. A method according to claim 13, wherein the engine is configured for providing pressure liquid in the feed conduit (9) with alternating pressure between a high pressure above the predetermined pressure level and a low pressure below the predetermined pressure level, wherein the pressure liquid in the feed conduit (9) is lubricant, and wherein the method comprises pushing the plunger-member (29) towards the nozzle aperture (5') in the injection phase by the high pressure in the feed conduit (9), and causing retraction of the plunger-member (29) when the pressure is low in the feed conduit (9) and receiving lubricant in the front chamber (16D) through the inlet port (4A) from the feed conduit (9) when the pressure in the feed conduit (9) is low between the injection phases.

## Patentansprüche

1. Einspritzvorrichtung für einen großen langsam laufenden Zweitaktmotor, wobei die Einspritzvorrichtung (4) Folgendes umfasst:
- eine Düse (5) mit einer Düsenöffnung (5') zum Erstrecken in den Zylinder (1) und Einspritzen von Schmiermittel in den Zylinder (1) in der Einspritzphase;
- ein Auslassventilsystem (15) an der Düse (5) zum Öffnen und Schließen für eine Schmiermittelströmung zu der Düsenöffnung (5') während eines Einspritzzyklus; wobei das Auslassventilsystem (15) ein Rückschlag-Auslassventil (17) umfasst, das so angeordnet ist, dass es sich für eine Schmiermittelströmung zu der Düsenöffnung (5') öffnet, wenn der Druck an dem Rückschlag-Auslassventil (17) in der Einspritzphase über ein vorbestimmtes Druckniveau ansteigt;
- eine vordere Kammer (16D) zum Aufbewahren von Schmiermittel und Kommunizieren mit dem Auslassventilsystem (15) und die zum Ausstoßen von mindestens einem Teil des Schmiermittels in der vorderen Kammer (16D) bei Druckbeaufschlagung der vorderen Kammer (16D) in der Einspritzphase durch das Auslassventilsystem (15) konfiguriert ist;
**dadurch gekennzeichnet, dass** die Einspritzvorrichtung ein hydraulisch angetriebenes, mehrstufiges, kolbenbasiertes Pumpsystem umfasst, wobei das Pumpsystem ein hydraulisch angetriebenes Kolbenelement (29) umfasst und wobei das Pumpsystem dazu konfiguriert ist, das Kolbenelement (29) in mehreren aufeinanderfolgenden Schritten vor dem Zurückziehen des Kolbenelements (29) anzutreiben, um das Schmiermittel innerhalb der vorderen Kammer (16D) auf über die vorbestimmte Grenze in jedem von derartigen mehreren Schritte unter Druck zu setzen, um vor dem Zurückziehen des Kolbenelements (29) und dem Nachfüllen von Schmiermittel in die vordere Kammer (16D) mehrere vorbestimmte Teile von Schmiermittel aus der vorderen Kammer (16D) durch das Auslassventilsystem (15) und die Düsenöffnung (5') in den Zylinder (1) aufeinanderfolgend einzuspritzen.

2. Einspritzvorrichtung nach Anspruch 1, wobei das Pumpsystem einen Hardware-Endanschlag (26, 5", 28C) zum Begrenzen eines Bewegungsbereichs des Kolbenelements (29) in jedem der mehreren Schritte des Kolbenelements (29) umfasst.

3. Einspritzvorrichtung nach Anspruch 2, wobei die Einspritzvorrichtung (4) Folgendes umfasst:
- eine Aktoröffnung (4B) zur Strömungsverbindung mit einer Aktorleitung (10) und einer Druckkammer (27) in Kommunikation mit der Aktoröffnung (4B) zum Aufnehmen eines ersten Teils von Druckflüssigkeit von der Aktorleitung (10) durch die Aktoröffnung (4B) in der Einspritzphase, wobei der erste Teil der Druckflüssigkeit einen Druck über dem vorbestimmten Druckniveau aufweist;
- ein sich hin- und herbewegendes, hydraulisch angetriebenes Aktorelement (28), das in Kontakt mit der Druckkammer (27) steht und dazu konfiguriert ist, durch den ersten Teil der Druckflüssigkeit in der Druckkammer (27) in der Einspritzphase um eine vorbestimmte Hublänge (36) in Richtung zu der Düsenöffnung (5') angetrieben zu werden;
- ein sich hin- und herbewegendes Kolbenelement (29), das mit der vorderen Kammer (16D) in Kontakt steht und dazu konfiguriert ist, durch das Aktorelement (28) in der Einspritzphase um die Hublänge in Richtung der Düse (5) angetrieben zu werden, um als ein erster Einspritzschritt einen Druckanstieg in der vorderen Kammer (16D) zu bewirken und ein erstes vorbestimmtes Schmiermittelvolumen, das durch die Hublänge (36) definiert ist, von der vorderen Kammer (16D) durch das Rückschlag-Auslassventil (17) und die Düsenöffnung (5') in den Zylinder (1) zu pumpen,
- eine Einlassöffnung (4A) zur Strömungsverbindung mit einer Zuleitung (9) und einer Zwischenkammer (16C) in Kommunikation mit der Einlassöffnung (4A) zum Aufnehmen eines zweiten Teils von Druckflüssigkeit von der Zuleitung (9) durch die Einlassöffnung (4A) in der Einspritzphase, wobei der zweite Teil der Druckflüssigkeit einen Druck über dem vorbestimmten Druckniveau aufweist; wobei das sich hin- und herbewegende Kolbenelement (29) mit der Zwischenkammer (16C) in Kontakt steht und dazu konfiguriert ist, als ein zweiter Einspritzschritt durch den zweiten Teil der Druckflüssigkeit hydraulisch um eine vorbestimmte Bewegungsstrecke (37) angetrieben zu werden, um ein zweites vorbestimmtes Schmiermittelvolumen, das durch die Bewegungsstrecke (37) definiert ist, von der vorderen Kammer (16D) durch das Rückschlag-Auslassventil (17) und die Düsenöffnung (5') in den Zylinder (1) zu pumpen.

4. Einspritzvorrichtung nach Anspruch 3, wobei zwischen der Zwischenkammer (16C) und der vorderen Kammer (16D) ein Kammerventilsystem (24, 25, 48) bereitgestellt ist, wobei das Kammerventilsystem (24, 25, 48), wenn es geöffnet ist, dazu konfiguriert ist, die vordere Kammer (16D) mit der Zwischenkammer (16C) zu verbinden, um Schmiermittel von der Zwischenkammer (16C) durch das Kammerventilsystem (24, 25, 48) zu der vorderen Kammer (16D) strömen zu lassen, und dazu konfiguriert ist, wenn es geschlossen ist, die vordere Kammer (16D) von der Zwischenkammer (16C) zu trennen, um einen Rückfluss von Schmiermittel von der vorderen Kammer (16D) zu der Zwischenkammer (16C) zu verhindern, wenn Schmiermittel durch die Vorwärtsbewegung des Kolbenelements (29) in der Einspritzphase aus der vorderen Kammer (16D) durch die Düsenöffnung (5') ausgestoßen wird.

5. Einspritzvorrichtung nach Anspruch 3 oder 4, wobei die Einspritzvorrichtung (4) eine zusätzliche Einlassöffnung (4C) zum Aufnehmen von Schmiermittel für die vordere Kammer (16D) bei einem Druck unterhalb des vorbestimmten Drucks umfasst.

6. Einspritzvorrichtung nach Anspruch 5, wobei das Aktorelement (28) einen Schieber (28D) umfasst, auf dem das Kolbenelement (29) gleitend über die Bewegungsstrecke (37) zwischen einem hinteren Bauteil (28A) des Aktorelements (28) und einem vorderen Anschlag (28D) des Aktorelements (28) angeordnet ist, und wobei die Einspritzvorrichtung so konfiguriert ist, dass sich das Aktorelement (28) gleichzeitig mit der Bewegung des Kolbenelements (29) in Richtung der Düsenöffnung (5') in einer Richtung von der Düsenöffnung (5') weg bewegt.

7. Großer langsam laufender Zweitaktmotor, umfassend einen Zylinder (1) mit einem sich hin- und herbewegenden Kolben im Inneren und mit einer Vielzahl von Einspritzvorrichtungen (4), die während der Einspritzphasen zum Einspritzen von Schmiermittel in den Zylinder (1) entlang eines Umfangs des Zylinders (1) an verschiedenen Positionen an dem Umfang verteilt sind; wobei der Motor ferner eine Steuerung (11) zum Steuern der Menge und des Zeitpunkts der Schmiermitteleinspritzung durch mindestens eine der Einspritzvorrichtungen (4) umfasst; **dadurch gekennzeichnet, dass**
jede Einspritzvorrichtung (4) eine Einspritzvorrichtung entsprechend einem der Ansprüche 1-6 ist.

8. Motor nach Anspruch 7, wobei jede Einspritzvorrichtung Anspruch 3 entspricht und wobei die Steuerung (11) zum Zuführen von einem ersten Teil von Druckflüssigkeit aus der Aktorleitung (10) und einem zweiten Teil von Druckflüssigkeit aus der Zuleitung (9) zu der Einspritzvorrichtung (4), ein Teil nach dem anderen, durch eine Zuleitung (9) und durch eine Aktorleitung (10) mit den Einspritzvorrichtungen (4) verbunden ist, wobei
- die Aktoröffnung (4B) mit der Aktorleitung (10) strömungsverbunden ist und
- die Einlassöffnung (4A) mit der Zuleitung (9) strömungsverbunden ist.

9. Motor nach Anspruch 8, wobei der Motor zu Folgendem konfiguriert ist: Bereitstellen von Druckflüssigkeit in der Zuleitung (9) mit wechselndem Druck zwischen einem hohen Druck über dem vorbestimmten Druckniveau, um das Kolbenelement (29) in der Injektionsphase in Richtung der Düsenöffnung (5') zu drücken, und einem niedrigen Druck unterhalb des vorbestimmten Druckniveaus zum Zurückziehen des Kolbenelements (29); wobei die Druckflüssigkeit in der Zuleitung (9) Schmiermittel ist und wobei die vordere Kammer (16D) dazu konfiguriert ist, dieses Schmiermittel durch die Einlassöffnung (4A) aufzunehmen, wenn der Druck in der Zuleitung (9) auf niedrigem Druck ist.

10. Motor nach Anspruch 8 oder 9, wobei der Motor eine Zuführleitung (12) zum Zuführen von unter Druck stehendem Schmiermittel zu der Steuerung (11) bei einem Druck oberhalb des vorbestimmten Druckniveaus umfasst; und der Motor eine Rückführleitung (13) zum Ablassen des unter Druck stehenden Schmiermittels von der Steuerung (11) bei einem Druck unterhalb des vorbestimmten Druckniveaus umfasst; wobei die Steuerung (11) ein Ventilsystem umfasst, das zum Umschalten zwischen Zuständen konfiguriert ist, in denen die Zuführleitung (12) in einem ersten Zustand für den ersten Einspritzschritt mit der Aktorleitung (10) und nicht der Zuleitung (9) verbunden ist; wobei die Zuführleitung (12) in einem zweiten Zustand für den zweiten Einspritzschritt mit der Aktorleitung (10) und der Zuleitung (9) verbunden ist; wobei in einem dritten Zustand zum Zurückziehen des Aktorelements (28) und des Kolbenelements (29) nach der Einspritzung die Zuführleitung (12) von der Aktorleitung (10) und der Zuleitung (9) getrennt ist und die Rückführleitung (13) mit der Aktorleitung (10) und der Zuleitung (9) verbunden ist.

11. Verfahren zur Schmierung eines großen langsam laufenden Zweitaktmotors, der einen Zylinder (1) mit einem sich hin- und herbewegenden Kolben im Inneren und mit einer Vielzahl von Einspritzvorrichtungen (4) umfasst, die während der Einspritzphasen zum Einspritzen von Schmiermittel in den Zylinder (1) entlang eines Umfangs des Zylinders (1) an verschiedenen Positionen an dem Umfang verteilt sind; wobei der Motor ferner eine Steuerung (11) zum Steuern der Menge und des Zeitpunkts der Schmiermitteleinspritzung durch mindestens einen der Einspritzvorrichtungen (4) umfasst;
wobei jede Einspritzvorrichtung (4) Folgendes umfasst:
- eine Düse (5) mit einer Düsenöffnung (5'), die sich in den Zylinder (1) erstreckt und zum Einspritzen von Schmiermittel in den Zylinder (1) in der Einspritzphase dient;
- ein Auslassventilsystem (15) an der Düse (5) zum Öffnen und Schließen für eine Schmiermittelströmung zu der Düsenöffnung (5') während eines Einspritzzyklus; wobei das Auslassventilsystem (15) ein Rückschlag-Auslassventil (17) umfasst, das so angeordnet ist, dass es sich für eine Schmiermittelströmung zu der Düsenöffnung (5') öffnet, wenn der Druck an dem Rückschlag-Auslassventil (17) in der Einspritzphase über ein vorbestimmtes Druckniveau ansteigt;
- eine vordere Kammer (16D) zum Aufbewahren von Schmiermittel und Kommunizieren mit dem Auslassventilsystem (15) und die zum Ausstoßen von mindestens einem Teil des Schmiermittels in der vorderen Kammer (16D) bei Druckbeaufschlagung der vorderen Kammer (16D) in der Einspritzphase durch das Auslassventilsystem (15) konfiguriert ist;
**dadurch gekennzeichnet, dass** jeder der Einspritzvorrichtungen (4) ein hydraulisch angetriebenes, mehrstufiges, kolbenbasiertes Pumpsystem umfasst, wobei das Pumpsystem ein hydraulisch angetriebenes Kolbenelement (29) umfasst und wobei das Pumpsystem dazu konfiguriert ist, das Kolbenelement (29) in mehreren aufeinanderfolgenden Schritten vor dem Zurückziehen des Kolbenelements (29) anzutreiben, um das Schmiermittel innerhalb der vorderen Kammer (16D) auf über die vorbestimmte Grenze in jedem von derartigen mehreren Schritte unter Druck zu setzen, um vor dem Zurückziehen des Kolbenelements (29) und dem Nachfüllen von Schmiermittel in die vordere Kammer (16D) mehrere vorbestimmte Teile von Schmiermittel aus die vordere Kammer (16D) durch das Auslassventilsystem (15) und die Düsenöffnung (5') in den Zylinder (1) aufeinanderfolgend einzuspritzen, wobei das Verfahren Folgendes umfasst:
- in dem ersten Einspritzschritt, Antreiben des Kolbenelements (29) um eine vorbestimmte Hublänge (36) und Bewirken eines Druckanstiegs in der vorderen Kammer (16D) über das vorbestimmte Druckniveau und Pumpen eines ersten vorbestimmten Schmiermittelvolumens, das durch die Hublänge (36) definiert ist, durch das Rückschlag-Auslassventil (17) und die Düsenöffnung (5') in den Zylinder (1);
- in dem zweiten Einspritzschritt, weiteres Antreiben des Kolbenelements (29) um eine vorbestimmte Bewegungsstrecke (37) und Pumpen eines zweiten vorbestimmten Schmiermittelvolumens, das durch die Bewegungsstrecke (37) definiert ist, durch das Rückschlag-Auslassventil (17) und die Düsenöffnung (5') in den Zylinder (1);
- nur nach Abschluss sowohl des ersten als auch des zweiten Einspritzschrittes, Zurückziehen des Kolbenelements (29) und erneutes Füllen der vorderen Kammer (16B) mit dem Schmiermittel für eine nachfolgende Einspritzung.

12. Verfahren nach Anspruch 11, wobei das Pumpsystem einen ersten und einen zweiten Hardware-Endanschlag (26, 5", 28C) zum Begrenzen eines Bewegungsbereichs des Kolbenelements (29) in jedem der mehreren Schritte umfasst; und wobei das Verfahren Begrenzen der Hublänge (36) durch den ersten Hardware-Endanschlag (26) und Begrenzen der Bewegungsstrecke (37) durch den zweiten Hardware-Endanschlag (5", 28C) umfasst.

13. Verfahren nach Anspruch 12, wobei die Steuerung (11) zum Zuführen von einem ersten Teil von Druckflüssigkeit aus der Aktorleitung (10) und einem zweiten Teil von Druckflüssigkeit aus der Zuleitung (9) zu der Einspritzvorrichtung (4), ein Teil nach dem anderen, durch eine Zuleitung (9) und durch eine Aktorleitung (10) mit den Einspritzvorrichtungen (4) verbunden ist;
wobei jede Einspritzvorrichtung Folgendes umfasst:
- eine Aktoröffnung (4B), die zum Aufnehmen des ersten Teils von Druckflüssigkeit von der Aktorleitung (10) durch die Aktoröffnung (4B) in der Einspritzphase mit einer Aktorleitung (10) und einer Druckkammer (27) in Kommunikation mit der Aktoröffnung (4B) strömungsverbunden ist, wobei der erste Teil der Druckflüssigkeit einen Druck über dem vorbestimmten Druckniveau aufweist;
- ein sich hin- und herbewegendes, hydraulisch angetriebenes Aktorelement (28), das in Kontakt mit der Druckkammer (27) steht und dazu konfiguriert ist, durch den ersten Teil der Druckflüssigkeit in der Druckkammer (27) in der Einspritzphase um eine vorbestimmte Hublänge (36) in Richtung zu der Düsenöffnung (5') angetrieben zu werden;
- ein sich hin- und herbewegendes Kolbenelement (29), das mit der vorderen Kammer (16D) in Kontakt steht und dazu konfiguriert ist, durch das Aktorelement (28) in der Einspritzphase um die Hublänge (36) in Richtung der Düse (5) angetrieben zu werden, um als ein erster Einspritzschritt einen Druckanstieg in der vorderen Kammer (16D) zu bewirken und ein erstes vorbestimmtes Schmiermittelvolumen, das durch die Hublänge (36) definiert ist, von der vorderen Kammer (16D) durch das Rückschlag-Auslassventil (17) und die Düsenöffnung (5') in den Zylinder (1) zu pumpen,
- eine Einlassöffnung (4A), die mit einer Zuleitung (9) und einer Zwischenkammer (16C) in Kommunikation mit der Einlassöffnung (4A) zum Aufnehmen eines zweiten Teils von Druckflüssigkeit von der Zuleitung (9) durch die Einlassöffnung (4A) in der Einspritzphase, wobei der zweite Teil der Druckflüssigkeit einen Druck über dem vorbestimmten Druckniveau aufweist; wobei das sich hin- und herbewegende Kolbenelement (29) mit der Zwischenkammer (16C) in Kontakt steht und dazu konfiguriert ist, als ein zweiter Einspritzschritt durch den zweiten Teil der Druckflüssigkeit hydraulisch um eine vorbestimmte Bewegungsstrecke (37) angetrieben zu werden, um ein zweites vorbestimmtes Schmiermittelvolumen, das durch die Bewegungsstrecke (37) definiert ist, von der vorderen Kammer (16D) durch das Rückschlag-Auslassventil (17) und die Düsenöffnung (5') in den Zylinder (1) zu pumpen;
wobei das Verfahren Folgendes umfasst:
- in dem ersten Einspritzschritt, Bereitstellen von Druckflüssigkeit an der Aktoröffnung (4B) und Einführen eine ersten Teils von Druckflüssigkeit in die Druckkammer (27), Ausüben einer Kraft auf das Aktorelement (28) durch den ersten Teil von Druckflüssigkeit und Antreiben des Aktorelements (28) um die Hublänge (36) in Richtung der Düsenöffnung (5'); durch das Aktorelement (28), Antreiben des Kolbenelements (29) um die Hublänge (36) und Bewirken eines Druckanstiegs in der vorderen Kammer (16D) über das vorbestimmte Druckniveau und Pumpen eines ersten vorbestimmte Schmiermittelvolumens durch das Rückschlag-Auslassventil (17) und die Düsenöffnung (5') in den Zylinder (1) ;
- in dem zweiten Einspritzschritt, Bereitstellen von Druckflüssigkeit an der Einlassöffnung (4A) und Einführen eines zweiten Teils der Druckflüssigkeit in die Zwischenkammer (16C), Ausüben einer Kraft auf das Kolbenelement (29) durch den zweiten Teil der Druckflüssigkeit und Antreiben des Kolbenelements (29) um die Bewegungsstrecke (37) in Richtung der Düsenöffnung (5') und Pumpen eines zweiten vorbestimmten Schmiermittelvolumens durch das Rückschlag-Auslassventil (17) und die Düsenöffnung (5') in den Zylinder (1);
- nach dem ersten und zweiten Einspritzschritt, Zurückziehen des Aktorelements (28) und des Kolbenelements (29) und erneutes Füllen der vorderen Kammer (16B) mit dem Schmiermittel für eine nachfolgende Einspritzphase.

14. Verfahren nach Anspruch 13, wobei der Motor zum Bereitstellen von Druckflüssigkeit in der Zuleitung (9) mit wechselndem Druck zwischen einem hohen Druck über dem vorbestimmten Druckniveau und einem niedrigen Druck unter dem vorbestimmten Druckniveau konfiguriert ist, wobei die Druckflüssigkeit in der Zuleitung (9) Schmiermittel ist und wobei das Verfahren Folgendes umfasst: Drücken des Kolbenelements (29) in Richtung der Drosselöffnung (5') in der Einspritzphase durch den hohen Druck in der Zuleitung (9) und Bewirken eines Zurückziehens des Kolbenelements (29), wenn der Druck in der Zuleitung (9) niedrig ist, und Aufnehmen von Schmiermittel in der vorderen Kammer (16D) durch die Einlassöffnung (4A) aus der Zuführleitung (9), wenn der Druck in der Zuleitung (9) zwischen den Einspritzphasen niedrig ist.

## Revendications

1. Injecteur pour un gros moteur à deux temps à fonctionnement lent, l'injecteur (4) comprenant
- une buse (5) avec une ouverture de buse (5') pour s'étendre dans le cylindre (1) et injecter du lubrifiant dans le cylindre (1) dans la phase d'injection ;
- un système de soupape de sortie (15) au niveau de la buse (5) pour s'ouvrir et se fermer pour un écoulement de lubrifiant vers l'ouverture de buse (5') pendant un cycle d'injection ; le système de soupape de sortie (15) comprenant une soupape de sortie anti-retour (17) agencée pour s'ouvrir pour un écoulement de lubrifiant vers l'ouverture de buse (5') lors d'une élévation de pression au-dessus d'un niveau de pression prédéterminé au niveau de la soupape de sortie anti-retour (17) en phase d'injection ;
- une chambre avant (16D) pour contenir du lubrifiant et communiquer avec le système de soupape de sortie (15) et étant configurée pour l'éjection d'au moins une partie du lubrifiant dans la chambre avant (16D) à travers le système de soupape de sortie (15) lors de la pressurisation de la chambre avant (16D) dans la phase d'injection ;
**caractérisé en ce que** l'injecteur comprend un système de pompage à base de piston multi-étage à entraînement hydraulique, le système de pompage comprenant un élément plongeur à entraînement hydraulique (29), et dans lequel le système de pompage est configuré pour entraîner l'élément plongeur (29) en plusieurs étapes consécutives avant la rétraction de l'élément plongeur (29) pour pressuriser le lubrifiant à l'intérieur de la chambre avant (16D) au-dessus de la limite prédéterminée dans chacune de ces multiples étapes pour l'injection consécutive de plusieurs parties prédéterminées de lubrifiant depuis la chambre avant (16D) à travers le système de soupape de sortie (15) et l'ouverture de buse (5') dans le cylindre (1) avant la rétraction de l'élément plongeur (29) et le remplissage de lubrifiant dans la chambre avant (16D).

2. Injecteur selon la revendication 1, dans lequel le système de pompage comprend une butée matérielle (26, 5", 28C) pour délimiter une plage de mouvement de l'élément plongeur (29) dans chacune des multiples étapes de l'élément plongeur (29).

3. Injecteur selon la revendication 2, dans lequel l'injecteur (4) comprend
- un orifice d'actionneur (4B) pour une connexion fluidique à un conduit d'actionneur (10) et une chambre de pression (27) en communication avec l'orifice d'actionneur (4B) pour recevoir une première partie de liquide sous pression provenant du conduit d'actionneur (10) à travers l'orifice d'actionneur (4B) dans la phase d'injection, la première partie de liquide sous pression ayant une pression supérieure au niveau de pression prédéterminé ;
- un élément actionneur à entraînement hydraulique alternatif (28) en contact avec la chambre de pression (27) et configuré pour être entraîné sur une longueur de course prédéterminée (36) dans une direction vers l'ouverture de buse (5') par la première partie de liquide sous pression dans la chambre de pression (27) dans la phase d'injection ;
- un élément plongeur alternatif (29) en contact avec la chambre avant (16D) et configuré pour être entraîné par l'élément actionneur (28) sur la longueur de course vers la buse (5) en phase d'injection pour provoquer une élévation de pression dans la chambre avant (16D) et pour pomper un premier volume de lubrifiant prédéterminé, défini par la longueur de course (36), depuis la chambre avant (16D) à travers la soupape de sortie anti-retour (17) et l'ouverture de buse (5') dans le cylindre (1) comme première étape d'injection,
- un orifice d'entrée (4A) pour une connexion fluidique à un conduit d'alimentation (9) et une chambre intermédiaire (16C) en communication avec l'orifice d'entrée (4A) pour recevoir une seconde partie de liquide sous pression du conduit d'alimentation (9) à travers l'orifice d'entrée (4A) dans la phase d'injection, la seconde partie de liquide sous pression ayant une pression supérieure au niveau de pression prédéterminé ; dans lequel l'élément plongeur alternatif (29) est en contact avec la chambre intermédiaire (16C) et configuré pour être entraîné hydrauliquement sur une distance prédéterminée de mouvement (37) par la seconde partie de liquide sous pression pour pomper un second volume de lubrifiant prédéterminé, défini par la distance de déplacement (37), depuis la chambre avant (16D) à travers la soupape de sortie anti-retour (17) et l'ouverture de buse (5') dans le cylindre (1) en tant que seconde étape d'injection.

4. Injecteur selon la revendication 3, dans lequel un système chambre-soupape (24, 25, 48) est prévu entre la chambre intermédiaire (16C) et la chambre avant (16D), dans lequel le système chambre-soupape (24, 25, 48) est configuré pour relier la chambre avant (16D) à la chambre intermédiaire (16C), lorsqu'il est ouvert, pour l'écoulement de lubrifiant à travers le système chambre-soupape (24, 25, 48) de la chambre intermédiaire (16C) à la chambre avant (16D) et configuré pour déconnecter la chambre avant (16D) de la chambre intermédiaire (16C), lorsqu'il est fermé, pour empêcher le reflux de lubrifiant de la chambre avant (16D) vers la chambre intermédiaire (16C) lorsque le lubrifiant est expulsé de la chambre avant (16D) à travers l'ouverture de buse (5') par le mouvement vers l'avant de l'élément plongeur (29) dans la phase d'injection.

5. Injecteur selon la revendication 3 ou 4, dans lequel l'injecteur (4) comprend un orifice d'entrée supplémentaire (4C) pour recevoir du lubrifiant pour la chambre avant (16D) à une pression inférieure à la pression prédéterminée.

6. Injecteur selon la revendication 5, dans lequel l'élément d'actionnement (28) comprend une glissière (28D) sur laquelle l'élément plongeur (29) est agencé en coulissement sur la distance de déplacement (37) entre une partie arrière (28A) de l'élément actionneur (28) et une butée avant (28D) de l'élément actionneur (28), et dans lequel l'injecteur est configuré pour que l'élément actionneur (28) se déplace dans une direction s'éloignant de l'ouverture de buse (5') simultanément avec l'élément plongeur (29) se déplaçant vers l'ouverture de buse (5').

7. Gros moteur à deux temps à fonctionnement lent comprenant un cylindre (1) avec un piston alternatif à l'intérieur et avec une pluralité d'injecteurs (4) répartis le long d'un périmètre du cylindre (1) pour l'injection de lubrifiant dans le cylindre (1) à différentes positions du périmètre lors des phases d'injection ; le moteur comprenant en outre un contrôleur (11) pour contrôler la quantité et la synchronisation de l'injection de lubrifiant par au moins l'un des injecteurs (4) ; **caractérisé en ce que**
chaque injecteur (4) est un injecteur selon l'une quelconque des revendications 1 à 6.

8. Moteur selon la revendication 7, dans lequel chaque injecteur est selon la revendication 3 et dans lequel le contrôleur (11) est relié par un conduit d'alimentation (9) et par un conduit d'actionnement (10) aux injecteurs (4) pour fournir une première partie de liquide sous pression provenant du conduit d'actionnement (10) et une seconde partie de liquide sous pression provenant du conduit d'alimentation (9) vers l'injecteur (4), une partie après l'autre, dans lequel
- l'orifice d'actionnement (4B) est en communication fluidique avec le conduit d'actionnement (10) et
- l'orifice d'entrée (4A) est en communication fluidique avec le conduit d'alimentation (9).

9. Moteur selon la revendication 8, dans lequel le moteur est configuré pour fournir du liquide sous pression dans le conduit d'alimentation (9) avec une pression alternée entre une haute pression supérieur au niveau de pression prédéterminé, pour pousser l'élément plongeur (29) vers la buse ouverture (5') dans la phase d'injection, et une basse pression inférieure au niveau de pression prédéterminé, pour la rétraction de l'élément plongeur (29) ; dans lequel le liquide sous pression dans le conduit d'alimentation (9) est un lubrifiant et dans lequel la chambre avant (16D) est configurée pour recevoir ce lubrifiant à travers l'orifice d'entrée (4A) lorsque la pression dans le conduit d'alimentation (9) est une basse pression.

10. Moteur selon la revendication 8 ou 9, dans lequel le moteur comprend un conduit d'alimentation (12) pour fournir du lubrifiant sous pression au contrôleur (11) à une pression supérieure au niveau de pression prédéterminé ; et le moteur comprend un conduit de retour (13) pour évacuer le lubrifiant sous pression du contrôleur (11) à une pression inférieure au niveau de pression prédéterminé ; dans lequel le contrôleur (11) comprend un système de soupape configuré pour basculer entre des états dans lesquels le conduit d'alimentation (12) est relié au conduit d'actionneur (10) et n'est pas relié au conduit d'alimentation (9) dans un premier état pour la première étape d'injection ; dans lequel le conduit d'alimentation (12) est relié au conduit d'actionnement (10) et au conduit d'alimentation (9) dans un deuxième état pour la seconde étape d'injection ; dans lequel le conduit d'alimentation (12) est déconnecté du conduit d'actionnement (10) et du conduit d'alimentation (9), et le conduit de retour (13) est relié au conduit d'actionnement (10) et au conduit d'alimentation (9) dans un troisième état de rétraction de l'élément actionneur (28) et de l'élément plongeur (29) après injection.

11. Procédé de lubrification d'un gros moteur à deux temps à fonctionnement lent comprenant un cylindre (1) avec un piston alternatif à l'intérieur et avec une pluralité d'injecteurs (4) répartis le long d'un périmètre du cylindre (1) pour l'injection de lubrifiant dans le cylindre (1) à différentes positions du périmètre lors des phases d'injection ; le moteur comprenant en outre un contrôleur (11) pour contrôler la quantité et la synchronisation de l'injection de lubrifiant par au moins l'un des injecteurs (4) ;
dans lequel chaque injecteur (4) comprend
- une buse (5) avec une ouverture de buse (5') s'étendant dans le cylindre (1) pour injecter du lubrifiant dans le cylindre (1) dans la phase d'injection ;
- un système de soupape de sortie (15) au niveau de la buse (5) pour s'ouvrir et se fermer pour un écoulement de lubrifiant vers l'ouverture de buse (5') pendant un cycle d'injection ; le système de soupape de sortie (15) comprenant une soupape de sortie anti-retour (17) agencée pour s'ouvrir pour un écoulement de lubrifiant vers l'ouverture de buse (5') lors d'une élévation de pression au-dessus d'un niveau de pression prédéterminé au niveau de la soupape de sortie anti-retour (17) dans la phase d'injection ;
- une chambre avant (16D) pour contenir du lubrifiant et communiquer avec le système de soupape de sortie (15) et étant configurée pour l'éjection d'au moins une partie du lubrifiant dans la chambre avant (16D) à travers le système de soupape de sortie (15) lors de la pressurisation de la chambre avant (16D) dans la phase d'injection ;
**caractérisé en ce que** chacun des injecteurs (4) comprend un système de pompage à base de piston multi-étage à entraînement hydraulique, le système de pompage comprenant un élément plongeur à entraînement hydraulique (29), et dans lequel le système de pompage est configuré pour entraîner l'élément plongeur (29) en plusieurs étapes consécutives avant la rétraction de l'élément plongeur (29) pour pressuriser le lubrifiant à l'intérieur de la chambre avant (16D) au-dessus de la limite prédéterminée dans chacune de ces multiples étapes pour l'injection consécutive de plusieurs parties prédéterminées de lubrifiant depuis la chambre avant (16D) à travers le système de soupape de sortie (15) et l'ouverture de buse (5') dans le cylindre (1) avant la rétraction de l'élément plongeur (29) et le remplissage de lubrifiant dans la chambre avant (16D).
dans lequel le procédé comprend
- dans la première étape d'injection, l'entraînement de l'élément plongeur (29) d'une longueur de course prédéterminée (36) et la provocation d'une augmentation de pression dans la chambre avant (16D) au-dessus du niveau de pression prédéterminé et le pompage d'un premier volume de lubrifiant prédéterminé, défini par la longueur de course (36), à travers la soupape de sortie anti-retour (17) et l'ouverture de buse (5') dans le cylindre (1) ;
- dans la seconde étape d'injection, l'entraînement en outre de l'élément plongeur (29) sur une distance de mouvement prédéterminée (37) et le pompage d'un second volume de lubrifiant prédéterminé, défini par la distance de mouvement (37), à travers la soupape de sortie anti-retour (17) et l'ouverture de buse (5') dans le cylindre (1) ;
- seulement après l'achèvement à la fois de la première et de la seconde étapes d'injection, la rétractation de l'élément plongeur (29) et le remplissage de nouveau de la chambre avant (16B) avec le lubrifiant pour une injection ultérieure.

12. Procédé selon la revendication 11, dans lequel le système de pompage comprend une première et une seconde butées matérielles (26, 5", 28C) pour délimiter une plage de mouvement de l'élément plongeur (29) dans chacune des étapes multiples ; et dans lequel le procédé comprend la délimitation de la longueur de course (36) par la première butée matérielle (26) et la délimitation de la distance de déplacement (37) par la seconde butée matérielle (5", 28C).

13. Procédé selon la revendication 12, dans lequel le contrôleur (11) est relié par un conduit d'alimentation (9) et par un conduit d'actionnement (10) aux injecteurs (4) pour fournir une première partie de liquide sous pression provenant du conduit d'actionnement (10) et une seconde partie de liquide sous pression provenant du conduit d'alimentation (9) vers l'injecteur (4), une partie après l'autre ;
dans lequel chaque injecteur comprend
- un orifice d'actionneur (4B) connecté fluidiquement au conduit d'actionneur (10) et une chambre de pression (27) en communication avec l'orifice d'actionneur (4B) pour recevoir la première partie de liquide sous pression provenant du conduit d'actionneur (10) à travers l'orifice d'actionneur (4B) dans la phase d'injection, la première partie de liquide sous pression ayant une pression supérieure au niveau de pression prédéterminé ;
- un élément actionneur à entraînement hydraulique alternatif (28) en contact avec la chambre de pression (27) et configuré pour être entraîné sur une longueur de course prédéterminée (36) dans une direction vers l'ouverture de buse (5') par la première partie de liquide sous pression dans la chambre de pression (27) dans la phase d'injection ;
- un élément plongeur alternatif (29) en contact avec la chambre avant (16D) et configuré pour être entraîné par l'élément actionneur (28) sur la longueur de course (36) vers la buse (5) dans la phase d'injection pour provoquer une élévation de pression dans la chambre avant (16D) et pour pomper un premier volume de lubrifiant prédéterminé, défini par la longueur de course (36), depuis la chambre avant (16D) à travers la soupape de sortie anti-retour (17) et l'ouverture de buse (5') dans le cylindre (1) comme première étape d'injection,
- un orifice d'entrée (4A) connecté fluidiquement au conduit d'alimentation (9) et une chambre intermédiaire (16C) en communication avec l'orifice d'entrée (4A) pour recevoir une seconde partie de liquide sous pression du conduit d'alimentation (9) à travers l'orifice d'entrée (4A) dans la phase d'injection, la seconde partie de liquide sous pression ayant une pression supérieure au niveau de pression prédéterminé ; dans lequel l'élément plongeur alternatif (29) est en contact avec la chambre intermédiaire (16C) et configuré pour être entraîné hydrauliquement sur une distance prédéterminée de mouvement (37) par la seconde partie de liquide sous pression pour pomper un second volume de lubrifiant prédéterminé, défini par la distance de déplacement (37), depuis la chambre avant (16D) à travers la soupape de sortie anti-retour (17) et l'ouverture de buse (5') dans le cylindre (1) en tant que seconde étape d'injection ;
dans lequel le procédé comprend ;
- dans la première étape d'injection, la fourniture de liquide sous pression au niveau de l'orifice d'actionnement (4B) et l'insertion d'une première partie de liquide sous pression dans la chambre de pression (27), exerçant une force sur l'élément d'actionnement (28) par la première partie de liquide sous pression et l'entraînement de l'élément actionneur (28) sur la longueur de course (36) vers l'ouverture de buse (5') ; par l'élément actionneur (28) entraînant l'élément plongeur (29) sur la longueur de course (36) et provoquant une élévation de pression dans la chambre avant (16D) au-dessus du niveau de pression prédéterminé et le pompage d'un premier volume de lubrifiant prédéterminé à travers la soupape de sortie anti-retour (17) et l'ouverture de buse (5') dans le cylindre (1) ;
- dans la seconde étape d'injection, la fourniture de liquide sous pression à l'orifice d'entrée (4A) et l'insertion d'une seconde partie de liquide sous pression dans la chambre intermédiaire (16C), l'exercice d'une force sur l'élément plongeur (29) par la seconde partie de liquide sous pression et l'entraînement de l'élément plongeur (29) sur la distance de mouvement (37) vers l'ouverture de buse (5') et le pompage d'un second volume de lubrifiant prédéterminé à travers la soupape de sortie anti-retour (17) et l'ouverture de buse (5') dans le cylindre (1) ;
- après la première et la seconde étapes d'injection, la rétractation de l'élément actionneur (28) et de l'élément plongeur (29) et le remplissage de nouveau de la chambre avant (16B) avec le lubrifiant pour une phase d'injection ultérieure.

14. Procédé selon la revendication 13, dans lequel le moteur est configuré pour fournir du liquide sous pression dans le conduit d'alimentation (9) avec une pression alternée entre une haute pression supérieure au niveau de pression prédéterminé et une basse pression inférieure au niveau de pression prédéterminé, dans lequel le liquide sous pression dans le conduit d'alimentation (9) est un lubrifiant, et dans lequel le procédé comprend le fait de pousser l'élément plongeur (29) vers l'ouverture de buse (5') dans la phase d'injection par la haute pression dans le conduit d'alimentation (9), et de provoquer la rétraction de l'élément plongeur (29) lorsque la pression est faible dans le conduit d'alimentation (9) et la réception de lubrifiant dans la chambre avant (16D) à travers l'orifice d'entrée (4A) depuis le conduit d'alimentation (9) lorsque la pression dans le conduit d'alimentation (9) est faible entre les phases d'injection.
